(19) **Europäisches Patentamt / European Patent Office / Office européen des brevets**

(11) **EP 4 667 090 A1**

(12) **EUROPEAN PATENT APPLICATION**
published in accordance with Art. 153(4) EPC

(43) Date of publication:
**24.12.2025 Bulletin 2025/52**

(21) Application number: **24756806.6**

(22) Date of filing: **09.02.2024**

(51) International Patent Classification (IPC):
**B01D 53/86** (2006.01)     **B01J 23/46** (2006.01)
**B01J 23/63** (2006.01)     **B01J 23/644** (2006.01)
**B01J 37/02** (2006.01)

(52) Cooperative Patent Classification (CPC):
**B01D 53/86; B01J 23/46; B01J 23/63;**
**B01J 23/644; B01J 37/02;** Y02C 20/10

(86) International application number:
**PCT/JP2024/004494**

(87) International publication number:
**WO 2024/171961 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.02.2023   JP 2023022427**
**05.02.2024   JP 2024015429**

(71) Applicant: **Sumitomo Chemical Company, Limited**
**Tokyo 103-6020 (JP)**

(72) Inventors:
• **WATANABE, Nobufumi**
**Niihama-shi, Ehime 792-8521 (JP)**
• **KUWASAKI, Naoto**
**Ichihara-shi, Chiba 299-0195 (JP)**

(74) Representative: **Global IP Europe**
**Patentanwaltskanzlei**
**Pfarrstraße 14**
**80538 München (DE)**

(54) **METHOD FOR DECOMPOSING NITROUS OXIDE AND METHOD FOR PRODUCING NITROUS OXIDE DECOMPOSITION CATALYST**

(57)     Provided are: a method of decomposing nitrous oxide capable of decomposing nitrous oxide for a long period of time while maintaining the nitrous oxide decomposition rate; and a method of producing a nitrous oxide decomposition catalyst suitably used in the decomposition method.

Disclosed are: a nitrous oxide decomposition method comprising the step of bringing a catalyst having a first component such as a ruthenium compound and a second component such as a zirconium compound carried on a titanium oxide-containing carrier or a catalyst having a first component such as a ruthenium compound carried on a titanium oxide- and silicon oxide-containing carrier into contact with a nitrous oxide-containing gas containing nitrous oxide, water vapor, and oxygen; and a method of producing a nitrous oxide decomposition catalyst suitably used in the decomposition method.

EP 4 667 090 A1

**Description**

FIELD OF THE INVENTION

The present invention relates to a method of decomposing nitrous oxide and a method of producing a nitrous oxide decomposition catalyst.

BACKGROUND OF THE INVENTION

From the viewpoints of global environment protection and air pollution prevention, nitrogen oxides (NOx) in exhaust gas are regarded as a problem, and the emission thereof is strictly regulated. In particular, among nitrogen oxides is a nitrogen dioxide ($NO_2$), which is harmful to the human body and causes photochemical smog and acid rain and is thus a target of emission control. Here, various denitration techniques have been studied and put into practice in order to reduce the emission amount. However, nitrous oxide ($N_2O$), which is a kind of nitrogen oxide, is not currently subject to emission control, and is usually released into the atmosphere as it is. Actually, in the gas discharged from a chemical production plant, such as a nitric acid production plant, an ε-caprolactam production plant, an adipic acid production plant, nitrogen monoxide and nitrogen dioxide are decomposed and removed by denitration treatment, but nitrous oxide as a by-product is often discharged (released) into the atmosphere without being decomposed and removed.

However, once a greenhouse gas such as nitrous oxide is released into the atmosphere, an increase in the level of greenhouse gas makes stronger the greenhouse effect on the atmosphere. This is considered to cause global warming. Nitrous oxide is then considered to elicit a warming effect about 300 times that of carbon dioxide. Thus, in recent years, there is an increasing interest in reducing emission of nitrous oxide into the atmosphere together with, for instance, carbon dioxide and methane. With the increase in sustainable environmental awareness, it is expected that nitrous oxide will be a target of emission gas control in the near future. Therefore, there is a need for a technology for decomposing and removing nitrous oxide from exhaust gas to suppress the amount of emission into the atmosphere. As a technology for decomposing and removing nitrous oxide from exhaust gas, for example, Patent Literature 1 describes a nitrous oxide decomposition method in which a gas containing nitrous oxide is catalytically decomposed in the co-presence of a reducing gas by using a catalyst characterized by carrying at least one or more noble metals selected from ruthenium (Ru), rhodium (Rh), palladium (Pd), rhenium (Re), osmium (Os), iridium (Ir), or platinum (Pt).

CITATION LIST

PATENT LITERATURE

Patent Literature 1: JP-A-H06-218232 ("JP-A" means unexamined published Japanese patent application)

SUMMARY OF THE INVENTION

TECHNICAL PROBLEM

The nitrous oxide decomposition method described in Patent Literature 1 is considered to be able to decompose nitrous oxide in a nitrous oxide-containing gas by catalytically decomposing the nitrous oxide-containing gas in the co-presence of a reducing gas such as carbon monoxide, a hydrocarbon gas, a mineral oil-based hydrocarbon gas, and/or alcohols.

Incidentally, the catalytic activity of a catalyst (nitrous oxide decomposition catalyst) used for decomposing nitrous oxide is also gradually deactivated when the catalyst is used for the decomposition of nitrous oxide. Therefore, in consideration of the situation about nitrous oxide described above, it is desirable to maintain a high decomposition rate while suppressing a decrease in the nitrous oxide decomposition rate even when the decomposition of nitrous oxide is performed for a long time. However, Patent Literature 1 is silent on this point.

The present invention provides a method of decomposing nitrous oxide capable of decomposing nitrous oxide for a long period of time while maintaining the nitrous oxide decomposition rate, and a method of producing a nitrous oxide decomposition catalyst suitably used in the decomposition method.

SOLUTION TO PROBLEM

Specifically, the above problems of the present invention are solved by the following means.

<1> A method of decomposing nitrous oxide, comprising the step of bringing a nitrous oxide-containing gas containing nitrous oxide, water vapor, and oxygen into contact with a catalyst having, carried on a titanium oxide-containing carrier, a first component containing at least one kind selected from the group consisting of ruthenium and ruthenium compounds and a second component containing at least one kind selected from the group consisting of antimony, antimony compounds, cerium, cerium compounds, zirconium, zirconium compounds, silicon, and silicon compounds.

<2> The method of decomposing nitrous oxide described in <1>, wherein the second component is an oxide containing at least one kind selected from the group consisting of antimony oxide, cerium oxide, zirconium oxide, and silicon oxide.

<3> The method of decomposing nitrous oxide described in <1>, wherein the second component contains at least one kind selected from the group consisting of zirconium and zirconium compounds.

<4> The method of decomposing nitrous oxide described in any one of <1> to <3>, wherein a molar ratio of content of a metal element contained in the second component in the catalyst to content of the ruthenium element contained in the first component is from 0.1 to 5.

<5> The method of decomposing nitrous oxide described in any one of <1> to <4>, wherein the first component contains ruthenium oxide.

<6> The method of decomposing nitrous oxide described in any one of <1> to <5>, wherein the ruthenium element in the catalyst has a content of 0.5 to 10 mass%.

<7> The method of decomposing nitrous oxide described in any one of <1> to <6>, wherein the catalyst is on a substrate having a honeycomb structure.

<8> A method of decomposing nitrous oxide, comprising the step of bringing a catalyst having, carried on a titanium oxide- and silicon oxide-containing carrier, a first component containing at least one kind selected from the group consisting of ruthenium and ruthenium compounds into contact with a nitrous oxide-containing gas containing nitrous oxide, water vapor, and oxygen.

<9> The method of decomposing nitrous oxide described in <8>, wherein the silicon oxide in the carrier has a content of 1 to 20 mass%.

<10> The method of decomposing nitrous oxide described in <8> or <9>, wherein the silicon oxide is derived from colloidal silica having a particle diameter of 5 to 45 nm.

<11> The method of decomposing nitrous oxide described in any one of <8> to <10>, wherein the carrier further carries a second component containing at least one kind selected from the group consisting of antimony, antimony compounds, cerium, cerium compounds, zirconium, zirconium compounds, silicon, and silicon compounds.

<12> The method of decomposing nitrous oxide described in <11>, wherein the second component is an oxide containing at least one kind selected from the group consisting of antimony oxide, cerium oxide, zirconium oxide, and silicon oxide.

<13> The method of decomposing nitrous oxide described in any one of <8> to <10>, wherein the carrier further carries a second component containing at least one kind selected from the group consisting of zirconium and zirconium compounds.

<14> The method of decomposing nitrous oxide described in any one of <11> to <13>, wherein a molar ratio of content of a metal element contained in the second component in the catalyst to content of the ruthenium element contained in the first component is from 0.1 to 5.

<15> The method of decomposing nitrous oxide described in any one of <8> to <14>, wherein the first component contains ruthenium oxide.

<16> The method of decomposing nitrous oxide described in any one of <8> to <15>, wherein the ruthenium element in the catalyst has a content of 0.5 to 10 mass%.

<17> The method of decomposing nitrous oxide described in any one of <8> to <16>, wherein the catalyst is on a substrate having a honeycomb structure.

<18> A method of producing a nitrous oxide decomposition catalyst, comprising the steps of:

producing a carrier by calcinating a carrier precursor obtained by extruding a carrier raw material mixture containing titanium oxide, silicon oxide, and water;
causing the carrier to carry a first component raw material containing a ruthenium compound;
causing the carrier to carry a second component raw material containing at least one kind selected from the group consisting of antimony compounds, cerium compounds, zirconium compounds, and silicon compounds;
calcinating a catalyst precursor having the first component raw material and the second component raw material carried on the carrier.

<19> The method of producing a nitrous oxide decomposition catalyst described in <18>, wherein the second component raw material is a zirconium compound.

<20> The method of producing a nitrous oxide decomposition catalyst described in <18> or <19>, wherein the silicon oxide is colloidal silica having a particle diameter of 5 to 45 nm.

<21> The method of producing a nitrous oxide decomposition catalyst described in any one of <18> to <20>, comprising a step of disposing, after calcinating the catalyst precursor, the catalyst precursor on a substrate having a honeycomb structure.

ADVANTAGEOUS EFFECTS OF INVENTION

The present invention can provide a method of decomposing nitrous oxide capable of decomposing nitrous oxide for a long period of time while maintaining the nitrous oxide decomposition rate, and a method of producing a nitrous oxide decomposition catalyst suitably used in the decomposition method.

DESCRIPTION OF EMBODIMENTS

A numerical value range indicated by using the term "to" in the present invention and the present specification means a range including the numerical values described before and after the term "to" as the lower limit value and the upper limit value, respectively.

[[Method of decomposing nitrous oxide]]

The method of decomposing nitrous oxide of the present invention (hereinafter, sometimes simply referred to as the "decomposition method of the present invention") includes the step of bringing the below-described catalyst (sometimes referred to as a "nitrous oxide decomposition catalyst") into contact with a nitrous oxide-containing gas containing nitrous oxide, water vapor, and oxygen (hereinafter, sometimes referred to as a "contact step").
This contact step using the below-described catalyst makes it possible to decompose nitrous oxide in the nitrous oxide-containing gas into nitrogen molecules (usually nitrogen gas) and oxygen molecules (usually oxygen gas) while maintaining a high decomposition rate for a long period of time.

[Catalyst]

The catalyst used in the decomposition method of the present invention is a nitrous oxide decomposition catalyst having a function of decomposing nitrous oxide, and is a catalyst having, on the carrier surface or near the surface or in pores, a component (second component or silicon oxide) other than the first component such as ruthenium exhibiting catalytic activity. Here, preferred catalysts include the following catalysts.
Catalyst I: a catalyst having, carried on a titanium oxide-containing carrier, a first component containing at least one kind selected from the group consisting of ruthenium and ruthenium compounds (hereinafter, sometimes referred to as the first carried component) and a second component containing at least one kind selected from the group consisting of antimony, antimony compounds, cerium, cerium compounds, zirconium, zirconium compounds, silicon, and silicon compounds (hereinafter, sometimes referred to as the second carried component).
Catalyst II: a catalyst having, carried on a titanium oxide- and silicon oxide-containing carrier, the above first carried component.
In the catalyst II, the first carried component and the second carried component are preferably supported on a titanium oxide- and silicon oxide-containing carrier, and for convenience, this catalyst is referred to as a "catalyst II (preferred embodiment)". Note that in the catalyst II, silicon oxide is preferably present (dispersed) on or near the surfaces of the titanium oxide primary particles.
In the present invention, the carried component is a generic term for components (e.g., elements, compounds) supported on a carrier constituting a catalyst, and examples thereof include a first carried component, a second carried component, and a third carried component described later. In addition, the "catalyst having, carried on a carrier, the carried component" means a catalyst in which the carried component is attached to the surface and/or the pores of the carrier.
In the catalyst used in the decomposition method of the present invention, the first carried component carried by a carrier includes at least one kind selected from the group consisting of ruthenium and ruthenium compounds from the viewpoint of a balance between catalytic activity and cost.

<Carried components>

The catalyst I contains, as the carried component carried by the below-described carrier, a first carried component having nitrous oxide decomposition capacity (catalytic activity) and a second carried component different from the first carried component. The carried component supported in the catalyst I may include a third carried component that does not correspond to either the first carried component or the second carried component.
On the other hand, the catalyst II contains, as the carried component carried by the below-described carrier, a first carried component having nitrous oxide decomposition capacity. The carried component supported in the catalyst II preferably includes a second carried component that differs from the first carried component, and may include a third carried component that does not correspond to either the first carried component or the second carried component.

Hereinafter, each carried component will be described.

<First carried component>

The first carried component supported in the catalyst I and the catalyst II includes at least one kind selected from the group consisting of ruthenium and ruthenium compounds. The number of kinds of the first carried component supported in each catalyst is not particularly limited as long as the number is one or more, and the number may be, for example, 1 to 4.

-Ruthenium compound-

Examples of the ruthenium compound include, but are not particularly limited to, ruthenium oxide, ruthenium hydroxide, ruthenium nitrate, ruthenium chloride, ruthenium acid, chlororuthenate, chlororuthenate hydrate, a salt of ruthenium acid, ruthenium oxychloride, a salt of ruthenium oxychloride, a ruthenium ammine complex, a ruthenium ammine complex chloride, ruthenium bromide, a ruthenium carbonyl complex, a ruthenium organic acid salt, and a ruthenium nitrosyl complex.

Examples of the ruthenium oxide include $RuO_2$.

Examples of the ruthenium hydroxide include $Ru(OH)_3$.

Examples of the ruthenium nitrate include $Ru(NO_3)_3$.

Examples of the ruthenium chloride include $RuCl_3$ and $RuCl_3$ hydrate.

Examples of the ruthenium acid include $H_2RuO_4$.

Examples of the chlororuthenate include a salt having $[RuCl_6]^{3-}$ as an anion, such as $K_3RuCl_6$, and a salt having $[RuCl_6]^{2-}$ as an anion, such as $K_2RuCl_6$, $(NH_4)_2RuCl_6$.

Examples of the chlororuthenate hydrate include a salt hydrate having $[RuCl_5(H_2O)_4]^{2-}$ as an anion and a salt hydrate having $[RuCl_2(H_2O)_4]^+$ as a cation.

The salt of ruthenium acid includes a salt of $Ru^{VI}O_4{}^{2-}$ (tetraoxoruthenium (VI) acid ion) and a salt of $Ru^{VII}O_4{}^-$ (perruthenium acid ion, tetraoxoruthenium (VII) acid ion). Examples of the cation forming a salt include a cation of an alkali metal element, a cation of an alkaline earth metal element, $Ag^+$, and an ammonium cation. Among them, alkali metal salts of ruthenium acid (each salt of Li, Na, K, Rb, or Cs) are preferable, and Na salts or K salts of ruthenium acid are more preferable. Specific examples thereof include $Na_2RuO_4$ and $K_2RuO_4$.

Examples of the ruthenium oxychloride include $Ru_2OCl_4$, $Ru_2OCl_5$, and $Ru_2OCl_6$.

Examples of the salt of ruthenium oxychloride include $K_2Ru_2OCl_{10}$ and $Cs_2Ru_2OCl_4$.

Examples of the ruthenium ammine complex include a complex having $[Ru(NH_3)_6]^{2+}$, $[Ru(NH_3)_6]^{3+}$, or $[Ru(NH_3)_5H_2O]^{2+}$ as a complex ion.

Examples of the chloride of ruthenium ammine complex include a complex having $[Ru(NH_3)_5Cl]^{2+}$ as a complex ion, and $[Ru(NH_3)_6]Cl_2$, $[Ru(NH_3)_6]Cl_3$, and $[Ru(NH_3)_6]Br_3$.

Examples of the ruthenium bromide include $RuBr_3$ and $RuBr_3$ hydrate.

Examples of the ruthenium carbonyl complex include $Ru(CO)_5$ and $Ru_3(CO)_{12}$.

Examples of the ruthenium organic acid salt include $[Ru_3O(OCOCH_3)_6(H_2O)_3]OCOCH_3$ hydrate and $Ru_2(RCOO)_4Cl$ (R = an alkyl group having 1 to 3 carbon atoms).

Examples of the ruthenium nitrosyl complex include $K_2[RuCl_5(NO)]$, $[Ru(NH_3)_5(NO)]Cl_3$, $[Ru(OH)(NH_3)_4(NO)](NO_3)_2$, and $Ru(NO)(NO_3)_3$.

The ruthenium compound is preferably ruthenium oxide, ruthenium nitrate, ruthenium chloride, ruthenium bromide, a salt of ruthenium acid, or a ruthenium nitrosyl complex, and more preferably includes ruthenium oxide. Still more preferably, the ruthenium compound is ruthenium oxide.

The ruthenium compound may be a compound having a ruthenium element as one of constituent elements, and may be a compound containing an element (metal or non-metal) other than the ruthenium element. For example, ruthenium oxide may be an oxide having a ruthenium element as one of constituent elements, and includes a composite oxide containing a ruthenium element and an element (metal or non-metal) other than the ruthenium element, in addition to the oxide ($RuO_2$) of only the ruthenium element.

Note that the same applies to (metal) ruthenium, and in addition to metal ruthenium, an alloy of ruthenium and a metal other than ruthenium is included.

The content of the ruthenium element constituting the first carried component in the catalyst (in total 100 mass% of the catalyst) is not particularly limited and is appropriately set in both the catalyst I and the catalyst II, but is, for example, preferably 0.5 to 10 mass%, more preferably 0.5 to 5 mass%, and still more preferably 1 to 3 mass%.

(Second carried component)

The second carried component carried in the catalyst I or preferably carried in the catalyst II contains at least one kind selected from the group consisting of antimony, antimony compounds, cerium, cerium compounds, zirconium, zirconium compounds, silicon, and silicon compounds. The second carried component refers to a component that is substantially free of ruthenium element as a constituent element thereof. In the present invention, the term "substantially free of" means including a case where unavoidable materials are mixed. The catalyst carrying the second carried component for the decomposition of nitrous oxide may be used. In this case, even when nitrous oxide is decomposed for a long period of time, the decrease in catalytic activity of the catalyst can be suppressed, and nitrous oxide can be decomposed at a high decomposition rate. This second carried component may have a nitrous oxide decomposition capacity (catalytic activity) or does not necessarily have a nitrous oxide decomposition capacity (catalytic activity).

The number of kinds of the second carried component supported in the catalyst I is not particularly limited as long as the number is one or more, and the number may be, for example, 1 to 8 and preferably 1 to 4. On the other hand, the number of kinds of the second carried component supported in the catalyst II is not particularly limited, and may be 0 to 8, preferably 1 to 6, and more preferably 1 to 4.

The respective compounds of antimony, cerium, zirconium, or silicon are not particularly limited as long as they are compounds containing these elements, and appropriate compounds can be employed. Examples thereof include the same kinds of compounds as the above-mentioned ruthenium compounds (compounds in which the ruthenium element in the ruthenium compound is replaced by at least one kind of antimony element, cerium element, zirconium element, or silicon element).

-Antimony compound-

Examples of the antimony compound include antimony oxide, antimony sulfate, antimony chloride, or a salt of antimonic acid, and antimony oxide or antimony chloride is preferable.

Examples of antimony oxide include $Sb_2O_3$, $Sb_2O_4$, or $Sb_2O_5$.

Examples of antimony sulfate include $Sb_2(SO_4)_3$.

Examples of antimony chloride include $SbCl_3$.

Examples of the salt of antimonic acid include $NaSbO_3$.

-Cerium compound-

Examples of the cerium compound include cerium oxide, cerium hydroxide, cerium nitrate, cerium chloride, a salt of ceric acid, cerium sulfate, or cerium carbonate, and cerium oxide, cerium nitrate, cerium chloride, or cerium sulfate is preferable.

Examples of cerium oxide include $CeO_2$ or $Ce_2O_3$.

Examples of cerium hydroxide include $CeO_2 \cdot 2H_2O$.

Examples of cerium nitrate include $Ce(NO_3)_3 \cdot 6H_2O$.

Examples of cerium chloride include $CeCl_3 \cdot 7H_2O$.

Examples of the salt of ceric acid include $Ce(NH_4)_2(NO_3)_6$ hydrate.

Examples of cerium sulfate include $Ce(SO_4)_2 \cdot 4H_2O$.

Examples of cerium carbonate include $Ce_2(CO_3)_3 \cdot 8H_2O$.

-Zirconium compound-

Examples of the zirconium compound include zirconium oxide, zirconium hydroxide, zirconium oxynitrate, zirconium chloride, zirconium sulfate, zirconium acetate, or zirconium acetylacetonate, and zirconium oxide, zirconium oxynitrate, zirconium chloride, or zirconium sulfate is preferable.

Examples of zirconium oxide include $ZrO_2$.

Examples of zirconium hydroxide include $Zr(OH)_4$.

Examples of zirconium oxynitrate include $ZrO(NO_3)_2 \cdot 2H_2O$.

Examples of zirconium chloride include $ZrCl_3$ or $ZrCl_4$.

Examples of zirconium sulfate include $Zr(SO_4)_2 \cdot 4H_2O$.

Examples of zirconium acetylacetonate include $Zr(C_5H_7O_2)_4$.

-Silicon compound-

Examples of the silicon compound include silicon oxide, silicon chloride, a salt of silicic acid, or silicon alkoxide, and silicon oxide or a salt of silicic acid is preferable.

Examples of silicon oxide include $SiO_2$.

Examples of silicon chloride include $SiCl_4$.

Examples of the salt of silicic acid include a salt of orthosilicic acid, pyrosilicic acid, metasilicic acid, or the like, and specific examples thereof include $Na_2SiO_3$, $Na_4SiO_4$, $Na_2Si_2O_5$, or $Na_2Si_4O_9$.

Examples of the silicon alkoxide include $Si(OC_2H_5)_4$, $Si(OC_3H_7)_4$, or $Si(OC_4H_9)_4$.

A preferred compound among the second carried components is at least one kind selected from zirconium and zirconium compounds. On the other hand, the kind of the preferred compound among the second carried components is preferably an oxide containing at least one kind selected from the group consisting of antimony oxide, cerium oxide, zirconium oxide, and silicon oxide, more preferably includes at least zirconium oxide, and is still more preferably zirconium oxide.

The content (total content) of the metal elements (antimony, cerium, zirconium, and silicon) constituting the second carried component in the catalyst (in total 100 mass% of the catalyst) is not particularly limited and is appropriately set in both the catalyst I and the catalyst II. For example, the content of the metal elements in the catalyst I is preferably 0.003 to 49 mass%, more preferably 0.01 to 14 mass%, and still more preferably 0.4 to 3.7 mass%. Meanwhile, the content of the metal elements in the catalyst II is preferably 0 to 49 mass%, more preferably 0 to 14 mass%, and still more preferably 0 to 3.7 mass%.

Note that the content of each metal element in the catalyst can be set, if appropriate, in consideration of the total content.

In any of the catalyst I and the catalyst II, the content (total content) of the metal elements constituting the second carried component based on the content of the ruthenium element constituting the first carried component is preferably 0.1 to 5, more preferably 0.1 to 3, and still more preferably 0.1 to 2.1 in terms of a molar ratio (content (mol) of metal elements/content (mol) of ruthenium element) from the viewpoint of suppressing a decrease in catalytic activity (decrease in nitrous oxide decomposition rate).

(Third carried component)

The third carried component that the catalyst I or the catalyst II may carry is not particularly limited as long as it is a component that does not correspond to either the first carried component or the second carried component. Examples thereof include metals (e.g., aluminum, niobium, tin, copper, iron, cobalt, nickel, vanadium, chromium, molybdenum, tungsten, manganese, tellurium, sodium) or compounds of these metals (preferably oxides or sulfates of the above metals). The preferred third carried component is at least one oxide or sulfate selected from the group consisting of aluminum oxide, niobium oxide, manganese oxide, tellurium oxide, tin oxide, sodium oxide, and sodium sulfate.

The content (total content) of the metal elements constituting the third carried component in the catalyst (in total 100 mass% of the catalyst) is not particularly limited and is appropriately set in both the catalyst I and the catalyst II.

(Carrier)

The carrier constituting the catalyst I contains titanium oxide and is substantially free of silicon oxide, but may contain another compound(s) described later. By contrast, the carrier constituting the catalyst II is required to contain titanium oxide and silicon oxide, and may contain, for instance, another compound(s) described later.

In the present invention, the carrier refers to a carrier produced such that primary particles of titanium oxide or a compound containing titanium oxide and/or secondary particles formed by agglomerating the primary particles are formed into a desired shape. In addition, the surface of the carrier represents the surface of the formed carrier. The pores of the carrier represent any one or more of pores of primary particles, voids between primary particles in secondary particles, and voids between secondary particles in an aggregate of secondary particles.

In the present invention, the crystal form of titanium oxide constituting the carrier is not particularly limited, and may be any of a rutile crystal form, an anatase crystal form, or a brookite crystal form. In the present invention, titanium oxide constituting the carrier preferably contains titanium oxide in a rutile crystal form. From the viewpoint of catalytic activity, the content of titanium oxide in a rutile crystal form in the titanium oxide contained in the carrier is preferably 20 mass% or more, more preferably 30 mass% or more, still more preferably 80 mass% or more, and particularly 90 mass% or more based on total 100 mass% of the titanium oxide contained in the carrier.

In the present invention, the titanium oxide containing titanium oxide in a rutile crystal form refers to titanium oxide containing a rutile crystal among rutile crystals and anatase crystals, the ratio of which is measured by X-ray diffraction analysis. Various radiation sources are used as the X-ray source. Examples thereof include copper $K\alpha$ radiation. In the case of using copper $K\alpha$ radiation, the ratio of rutile crystals and the ratio of anatase crystals are determined using the intensity of a diffraction peak at $2\theta = 27.5$ degrees in the (110) plane and the intensity of a diffraction peak at $2\theta = 25.3$ degrees in the (101) plane, respectively. The carrier used in the present invention is a carrier having a peak intensity of rutile crystal and a peak intensity of anatase crystal, or a carrier having a peak intensity of rutile crystal. That is, the carrier may have both the diffraction peak of rutile crystal and the diffraction peak of anatase crystal, or may have only the diffraction peak of rutile crystal.

The carrier constituting the catalyst II contains silicon oxide, and preferably contains silicon oxide on the surface (including the vicinity of the surface) of the carrier and/or the inner surface (including the vicinity of the inner surface) of each pore. Nitrous oxide can be decomposed using the catalyst II in which the carrier contains silicon oxide. In this case, even when nitrous oxide is decomposed for a long period of time, the decrease in catalytic activity of the catalyst II can be suppressed, and nitrous oxide can be decomposed at a high decomposition rate. The silicon oxide is preferably silicon dioxide.

The silicon oxide contained in the carrier constituting the catalyst II is preferably silicon oxide derived from colloidal silica (e.g., a dried product of colloidal silica, and is in the form of particles or granules) from the viewpoint of facilitating the production of the carrier. The particle diameter of silicon oxide in the colloidal silica is not particularly limited, but is preferably 5 to 45 nm and more preferably 5 to 22 nm from the viewpoint of increasing the number of silicon oxide particles. The particle diameter of silicon oxide is an average particle diameter measured as follows. The average particle diameter (d) [nm] is calculated using the following formula from the specific surface area (S) [m$^2$/g], determined by the BET method, of powder obtained by evaporating and drying moisture contained in colloidal silica. Here, $\rho$ used is a value of 2.2 [g/cm$^3$] as the true density of silicon oxide.

$$d = 6000/(S \times \rho)$$

The particle diameter of silicon oxide present in the carrier of the catalyst II does not necessarily maintain the particle diameter of silicon oxide in the colloidal silica, but the particle diameter is preferably maintained.

The content of silicon oxide in the carrier constituting the catalyst II (in total 100 mass% of the carrier) is not particularly limited and is set, if appropriate. However, the content is, for example, preferably 1 to 20 mass%, more preferably 1 to 10 mass%, and still more preferably 1 to 5 mass% from the viewpoint of being capable of suppressing a decrease in catalytic activity and maintain the catalytic activity for a long period of time.

In the present invention, whether silicon oxide is the second carried component (catalyst I) or whether silicon oxide constitutes a carrier (catalyst II) can be checked by observing the catalyst with a scanning electron microscope or a scanning transmission electron microscope.

Examples of the other compound optionally contained in each carrier constituting the catalyst I or the catalyst II include a metal oxide or metal sulfate other than titanium oxide and other than silicon oxide, a composite oxide of titanium oxide and another metal oxide, a composite oxide of titanium oxide, silicon oxide, and another metal oxide, a mixture of titanium oxide and another metal oxide or metal sulfate, or a mixture of titanium oxide, silicon oxide, and another metal oxide or metal sulfate. Examples of the metal oxide include aluminum oxide, zirconium oxide, cerium oxide, or sodium oxide. Examples of the metal sulfate include sodium sulfate.

Titanium oxide prepared by a known method may be used, and commercially available products may also be used.

Examples of the method of preparing titanium oxide in a rutile crystal form include the following methods:

a method in which titanium tetrachloride is added dropwise to ice-cooled water and dissolved, and neutralized with an aqueous ammonia solution at a temperature of 20°C or higher to produce titanium hydroxide (orthotitanic acid), and, the generated precipitate was washed with water to remove chlorine ions, and is calcinated at a temperature of 600°C or higher (Catalyst Preparation Chemistry, 1989, p. 211, Kodansha Ltd.);
a method in which an oxygen-nitrogen mixed gas is made to pass through a titanium tetrachloride evaporator to prepare a reaction gas, and the resulting gas is introduced into a reactor and reacted at 900°C or higher (Catalyst Preparation Chemistry, 1989, p. 89, Kodansha Ltd.);
a method in which titanium tetrachloride is hydrolyzed in the presence of ammonium sulfate and then calcinated (e.g., Catalyst Engineering Course, Handbook of Catalysts Using Any of 10 Elements, 1978, p. 254, Chijinshokan, Co. Ltd.);
a method of calcinating titanium oxide in an anatase crystal form (e.g., Metal Oxides and Composite Oxides, 1980, p. 107, Kodansha Ltd.);
a method of thermally hydrolyzing a titanium chloride aqueous solution;
and
a method in which a titanium compound (e.g., titanium sulfate, titanium chloride)-containing aqueous solution is mixed with rutile crystalline titanium oxide powder, the mixture is subsequently subjected to thermal hydrolysis or alkali hydrolysis, and then calcinated at a temperature around 500°C.

The carrier that constitutes the catalyst II and contains silicon oxide may be produced by a step of obtaining a carrier described in the method of producing the catalyst II as described later.

The carrier can be obtained by molding, for instance, titanium oxide into a desired shape. When the carrier contains, for instance, titanium oxide and a compound (e.g., silicon oxide) other than titanium oxide, the carrier can be obtained by molding a mixture of titanium oxide and another compound(s) into a desired shape.

The shape of the catalyst (carrier) is not particularly limited, and can be set, if appropriate.

In a preferred embodiment of the present invention, a honeycomb shape (honeycomb structure) may be adopted. The honeycomb-shaped catalyst in a preferred embodiment is usually used as it is (in a state of having a honeycomb structure), but it is also possible to use the catalyst after pulverizing the catalyst and further classifying the pulverized product. The size in this case can be made substantially the same as the size of the following spherical particles.

On the other hand, in another preferred embodiment of the present invention, various shapes may be adopted. The shapes are not particularly limited, and examples thereof include a spherical shape, a cylindrical shape, a pellet shape in a ring form or the like, a monolith shape, a corrugated shape, or microparticles or granules with a suitable size as pulverized and classified after molding. Preferable examples of the shape of the catalyst include a spherical shape, a cylindrical shape, a pellet shape in a ring form or the like, a monolith shape, a corrugated shape, or granules. More preferable examples thereof include a pellet shape in a ring form from the viewpoint of efficiency of decomposing nitrous oxide.

In the present invention, the honeycomb structure refers to a "honeycomb structure" that is ordinarily meant as, for example, a honeycomb catalyst frequently used as an exhaust gas purifying catalyst. The honeycomb structure is, for example, a structure in which a plurality of through-holes is densely arranged in a planar direction and punched in a substrate, such as a columnar body.

The shape of the substrate is selected, if appropriate, according to, for example, the shape of a reactor (e.g., a reaction tube) in which the catalyst is packed and the mode of packing the honeycomb structure into a reactor. Examples thereof include a columnar body, a block body, and a plate body. The shape of the opening of the through-holes is not particularly limited, and examples thereof include a polygon such as a quadrangle and a hexagon; a circle; and an ellipse. The arrangement of the through-holes is not particularly limited, and is determined, if appropriate, in consideration of, for example, the shape of the opening. For example, the arrangement is a straight (parallel) arrangement, a staggered arrangement, or a honeycomb arrangement, in the planar direction (ordinarily, a plane perpendicular to the axis) of the substrate.

Examples of the honeycomb structure described above include a circular hole parallel arrangement, a circular hole staggered arrangement, and a circular hole honeycomb arrangement in which the opening shape of the through-holes is circular; a polygonal hole parallel arrangement, a polygonal hole staggered arrangement, and a polygonal hole honeycomb arrangement in which the opening shape of the through-holes is polygonal.

When the catalyst is formed as powder such as granules or microparticles, it is preferable that the catalyst is disposed as a washcoat layer on a substrate having a honeycomb structure. The substrate having a honeycomb structure may be composed of any material typically used to prepare automotive catalysts, typically composed of metal or ceramic. For example, various stainless or cordierite materials are used. The substrate typically provides a plurality of wall surfaces to which the washcoat layer is applied and adhered, thereby serving as a substrate for the catalyst. The mass of the washcoat layer is preferably 10 to 200 [g/L] and more preferably 30 to 100 [g/L] per unit volume of the substrate having a honeycomb structure.

The size of the catalyst (carrier) is not particularly limited, and can be set, if appropriate.

When the catalyst has a spherical particle shape or a cylindrical pellet shape, the catalyst diameter is preferably 10 mm or less from the viewpoint of catalytic activity. Note that the catalyst diameter herein means the diameter of a sphere in the case of spherical particles, the diameter of a cross section in the case of cylindrical pellets, or the maximum diameter of a cross section in the case of other shapes. In the case where the shape of the catalyst is a spherical shape, a cylindrical pellet shape, or the like, the packing volume ratio is preferably 35 to 74 vol% when the catalyst packed region of the reactor (reaction tube) is packed to form a catalyst packed layer.

In the above-described preferred embodiment of the present invention and another preferred embodiment of the present invention (in the substrate when the catalyst shape is formed as powder), the dimension of the honeycomb structure (catalyst) corresponds to a volume ratio of preferably 35 to 50 vol% and preferably 38 to 50 vol% from the viewpoint of an ability to further increase the efficiency of decomposing nitrous oxide. The volume ratio of the honeycomb structure (catalyst) refers to a proportion (percentage) of the actual volume of the honeycomb structure with respect to the apparent volume of the honeycomb structure. The apparent volume and the actual volume can be calculated from each dimension of the honeycomb structure by an ordinarily used method.

When the catalyst packed region of the reactor (reaction tube) is packed to form a catalyst packed layer, the honeycomb structure preferably has a packing volume ratio of 35 to 50 vol%, and more preferably has a packing volume ratio of 38 to 50 vol% from the viewpoint of being capable of further enhancing the efficiency of decomposing nitrous oxide. The packing volume ratio refers to the proportion (percentage) of the actual volume of the honeycomb structure to the volume of the catalyst packed region of the reactor (reaction tube).

The dimension of the catalyst can be set according to, for example, a dimension conforming to the catalyst packed region of the reactor (reaction tube), usually an outer dimension set to substantially the same as the inner dimension (inner diameter and length) of the catalyst packed region in consideration of the volume ratio or the packing volume ratio.

The opening diameter (also referred to as a cell size) of the through-holes, the distance between the through-holes (also referred to as a thickness of the inner wall), and the opening ratio in the honeycomb structure are determined, if appropriate. In the present invention, they are determined in consideration of, for example, the (packing) volume ratio. For example, the cell size may be from 1 to 3 mm, preferably from 1 to 2 mm. The thickness of the inner wall may be from 0.1 to 2 mm, preferably from 0.2 to 1 mm. The opening ratio ([(total area of through-holes opened in surface of honeycomb structure)/(apparent surface area of honeycomb structure)] $\times$ 100 (%)) may be from 50 to 65%, preferably from 50 to 62%. The cell size and the thickness of the inner wall can be measured by observing and measuring the honeycomb-shaped surface. The opening ratio can be calculated from the measured total area of the through-holes and the calculated apparent surface area.

In the present invention, a plurality of catalysts (the number of catalysts) or a plurality of kinds of catalysts can be used in combination.

In a preferred embodiment of the present invention, the catalyst includes a mode having a honeycomb structure satisfying the packing volume ratio by combining a plurality of catalysts (mode of forming a honeycomb structure in which a plurality of catalysts packed in a catalyst packed area satisfies the packing volume ratio as a whole). Preferably, the catalyst has a honeycomb structure satisfying the packing volume ratio alone. In this case, the packing volume ratio is synonymous with the packing ratio of the catalyst (the catalyst packing ratio of the catalyst alone). In addition, when a plurality of catalysts are combined, the honeycomb structure of each of the catalysts preferably satisfies the above packing volume ratio.

In another preferred embodiment of the present invention (when the catalyst is formed as powder), the catalyst disposed as the washcoat layer may be a combination of a plurality of catalysts.

In the decomposition method of the present invention, the catalyst may also be diluted with an inert substance and used.

<Method of producing catalyst>

The catalyst used in the decomposition method of the present invention may be produced by various known production methods, and for example, may be produced by a method in which a titanium oxide-containing carrier is impregnated with a solution containing a carried component to attach the carried component onto the carrier, and then the carrier is dried. The solvent in the solution containing a carried component is not particularly limited, but water, ethanol, or the like may be used. After drying, the resulting carrier may be calcinated.

When the catalyst contains ruthenium oxide, for example, the catalyst can be obtained by a method including the steps of: impregnating a titanium oxide-containing carrier with a solution containing a ruthenium halide or ruthenium nitrosyl complex to support the ruthenium halide or ruthenium nitrosyl complex on the carrier; drying the carrier material supported on the ruthenium halide- or ruthenium nitrosyl complex-carrying carrier; and calcinating the dried product.

When the catalyst I is produced, a solution A containing a first carried component or a first carried component raw material (also referred to as a first component raw material) capable of forming the first carried component and a solution B containing a second carried component or a second carried component raw material (also referred to as a second component raw material) capable of forming the second carried component may be used as a solution containing the carried components, and a mixed solution of the solution A and the solution B may also be used.

When the catalyst II is produced, the solution A can be used as the solution containing the carried components, and it is also preferable to use the solution A and the solution B in combination or to use a mixed solution of the solution A and the solution B.

Hereinafter, a preferred method of producing the catalyst II will be specifically described. Meanwhile, the catalyst I can also be produced by using a carrier raw material mixture which is free of silicon oxide in the step of obtaining the following carrier.

A preferred method of producing the catalyst II includes the following steps.

In the preferred production method, after step 1 is performed, either step 2 or step 3 may be performed first, and the following step 2A may be performed instead of step 2 and step 3.

Step 1: a step of producing a carrier by calcinating a carrier precursor obtained by extruding a carrier raw material mixture containing titanium oxide, silicon oxide, and water.

Step 2: a step of causing the carrier obtained in step 1 or the carrier carrying a second component raw material obtained in step 3 to carry a first component raw material containing a ruthenium compound.

Step 3: a step of causing the carrier obtained in step 1 or the carrier carrying the first component raw material obtained in step 2 to carry a second component raw material containing at least one kind selected from the group consisting of antimony compounds, cerium compounds, zirconium compounds, and silicon compounds.

Step 4: a step of calcinating a catalyst precursor having the first component raw material and the second component raw material carried on the carrier obtained in step 1.

Step 2A: a step of causing the carrier obtained in step 1 to carry a first component raw material containing a ruthenium compound and a second component raw material containing at least one kind selected from the group consisting of antimony compounds, cerium compounds, zirconium compounds, and silicon compounds.

(Step 1)

Titanium oxide used in step 1 is not particularly limited, and as described above, titanium oxide produced by various methods or commercially available product may be used.

The silicon oxide used in the step 1 is not particularly limited, and silicon oxide produced by various methods or a commercially available product may be used, but the silicon oxide is preferably used as an aqueous dispersion from the viewpoint of facilitating the production of a carrier, and colloidal silica is more preferably used. The particle diameter of silicon oxide in the colloidal silica is not particularly limited, but is preferably 5 to 45 nm and more preferably 5 to 22 nm from the viewpoint of increasing the number of silicon oxide particles. The particle diameter of silicon oxide is an average particle diameter measured by the above procedure. Examples of the commercially available product of colloidal silica include those used in Examples described later. In step 1, a known organic binder may also be used.

In step 1, titanium oxide, silicon oxide, and water are mixed to prepare a carrier raw material mixture. The form of the carrier raw material mixture is not particularly limited, and may be a liquid mixture such a solution or a slurry, or a powder mixture, but is preferably a clay-like mixture such as a kneaded material.

The mixing ratio between titanium oxide, silicon oxide, and water is not particularly limited, and is appropriately set, but the mixing ratio between titanium oxide and silicon oxide is preferably set to a ratio at which the content of silicon oxide in the carrier is the above content. The mixing ratio of water is not particularly limited, and is preferably set to a ratio at which the carrier raw material mixture becomes a clay-like mixture. Here, water may be mixed separately from titanium oxide and silicon oxide, or water in colloidal silica used as silicon oxide may be used.

Titanium oxide, silicon oxide, and water may be mixed using an ordinarily used mixing device or kneading machine. The mixing conditions are not particularly limited, but for example, the mixing temperature may be 5 to 40°C, and the mixing time may be 1 to 30 minutes.

In step 1, the prepared carrier raw material mixture is then extruded to obtain a carrier precursor.

The shape of the carrier precursor is not particularly limited, and may be molded into an appropriate shape. It is preferable that the carrier precursor is molded into the above-described honeycomb structure.

The carrier raw material mixture may be extruded using an ordinarily used extruder, and for example, a vacuum kneading extruder, a hydraulic extruder, or the like may be used. In particular, when a catalyst having a honeycomb structure is produced, it is preferable to use a vacuum kneading extruder. The extrusion conditions are not particularly limited, but for example, the kneading or extrusion temperature may be 5 to 40°C.

Thus, the carrier precursor can be obtained, but if necessary, the molded body can be dried to prepare the carrier precursor.

In step 1, the carrier precursor is then calcinated to obtain a carrier.

The carrier precursor may be calcinated by an ordinarily used method using various heaters. As the calcinating conditions, calcinating conditions applied to calcination of titanium oxide or silicon oxide can be applied without any particular limitation. For example, the calcinating temperature may be 250°C or higher and is preferably 400 to 900°C, and the calcinating time may be 2 to 120 hours.

(Step 2)

In step 2, a first component raw material containing a ruthenium compound is supported on a carrier.

The carrier used in this step varies depending on the execution order of step 2 and step 3. That is, when step 2 is performed prior to step 3 and when step 2 and step 3 are performed simultaneously (step 2A), the carrier (unsupported carrier) obtained in step 1 is used. On the other hand, when step 2 is performed after step 3, the carrier carrying the second component raw material obtained in step 3 is used.

The first component raw material used in step 2 contains a ruthenium compound. This ruthenium compound may be a compound that becomes the first carried component in the catalyst after production, such as ruthenium or a ruthenium compound, and may be the first carried component itself or a precursor compound resulting in the first carried component. Examples of the ruthenium compound used in step 2 include various known compounds, for example, $Ru(NO_3)_3$, $RuCl_3$, a $RuCl_3$ hydrate, $Na_2RuO_4$, $K_2RuO_4$, or $Ru(NO)(NO_3)_3$, which are the first carried component described above and also a precursor compound of the first carried component.

The first component raw material is usually used in the form of an aqueous solution. The content (concentration) of the first component raw material at this time is not particularly limited, but is preferably set within a range satisfying the above content of the ruthenium element in the catalyst, and for example, the content in terms of the ruthenium element is more preferably 1 to 40 mass% and still more preferably 2 to 10 mass%. The aqueous solution used in step 2 may contain a component other than the first carried component and other than the second carried component, and examples of such a component include the above-described third carried component and an organic solvent (e.g., alcohol) for blending the aqueous solution well with the carrier. In addition to the aqueous solution, a solution of an organic solvent such as alcohol may also be used.

In step 2, the carrier and the first component raw material are brought into contact with each other, so that the carrier carries the first component raw material.

The contact method and conditions are not particularly limited, and can be set, if appropriate. As for the contact method, various methods of causing, for example, a carrier to carry various components may be used as the method of producing a catalyst. Examples thereof include a method of impregnating a carrier in the above aqueous solution, and a coating method of spraying or applying the above aqueous solution onto a carrier. The amount of the aqueous solution used in this case is not particularly limited, but is preferably set within a range satisfying the above content of the ruthenium element in the catalyst, and for example, the amount of the aqueous solution used per g of the carrier is more preferably 0.1 to 10 mL and still more preferably 0.2 to 2 mL. The contact conditions include, for example, a condition of contact at 5 to 40°C (preferably 10 to 30°C) for 1 to 300 minutes (preferably 5 to 180 minutes).

In step 2, the carrier impregnated with the first component raw material may be dried by an ordinarily used method.

In this way, the first component raw material can be carried or adsorbed on the carrier containing titanium oxide and silicon oxide.

<Step (3)>

Step 3 is a step of causing the carrier to carry a second component raw material containing at least one kind selected from the group consisting of antimony compounds, cerium compounds, zirconium compounds, and silicon compounds.

The carrier used in this step varies depending on the execution order of step 2 and step 3. That is, when step 3 is performed prior to step 2 and when step 2 and step 3 are performed simultaneously (step 2A), the carrier (unsupported carrier) obtained in step 1 is used. On the other hand, when step 3 is performed after step 2, the carrier carrying the first component raw material obtained in step 2 is used.

The second component raw material used in step 3 contains an antimony compound, a cerium compound, a zirconium compound, or a silicon compound. These compounds may be a compound that becomes the second carried component in the catalyst after production, such as an antimony compound, and may be the second carried component itself or a precursor compound resulting in the second carried component. Examples of the above compound used in step 3 include various known compounds, for example, $SbCl_3$, $Ce(NO_3)_3 \cdot 6H_2O$, $ZrO(NO_3)_2 \cdot 2H_2O$, or $Si(OC_2H_5)_4$, which are the second carried component described above and also a precursor compound of the second carried component.

The second component raw material is usually used in the form of an aqueous solution. The content (concentration) of the second component raw material at this time is not particularly limited, but is preferably set within a range satisfying the above content of the second component raw material (element) in the catalyst, and for example, the content in terms of the element is more preferably 0.01 to 20 mass% and still more preferably 1 to 15 mass%. The aqueous solution used in step 3 may contain a component other than the first carried component and other than the second carried component, and examples of such a component include the above-described third carried component and the above-mentioned organic solvent. In addition to the aqueous solution, a solution of an organic solvent such as alcohol may also be used.

In step 3, the carrier and the second component raw material are brought into contact with each other, so that the carrier carries the second component raw material.

The contact method and conditions are not particularly limited, and are the same as the contact method and conditions described in step 2 above. In particular, the amount of the second component raw material-containing aqueous solution used is not particularly limited, but is preferably set within a range satisfying the above content of the second component raw material (element) in the catalyst, and for example, the amount of the aqueous solution used per g of the carrier is more preferably 0.1 to 10 mL and still more preferably 0.2 to 2 mL.

In step 3, the carrier impregnated with the second component raw material may be dried by an ordinarily used method.

In this way, the second component raw material can be carried or adsorbed on the carrier containing titanium oxide and silicon oxide.

(Step 2A)

In a preferred method of producing the catalyst II, step 2 and step 3 may be performed simultaneously. In this case, instead of step 2 and step 3, step 2A of causing the carrier obtained in step 1 to carry the first component raw material and the second component raw material is performed.

The first component raw material and the second component raw material used in step 2A are as described in steps 2 and 3.

The first component raw material and the second component raw material is usually used in the form of an aqueous solution. The contents (concentrations) of the first component raw material and the second component raw material in this case are not particularly limited, and are as described in step 2 and step 3. The aqueous solution used in step 2A may also contain a component other than the first carried component and other than the second carried component, and examples of such a component include the above-described third carried component and the above-mentioned organic solvent. In addition to the aqueous solution, a solution of an organic solvent such as alcohol may also be used.

In step 2A, the carrier is brought into contact with the first component raw material and the second component raw material, so that the carrier carries the first component raw material and the second component raw material. The contact method and conditions are not particularly limited, and are the same as the contact method and conditions described in step 2 above. In step 2A, the carrier impregnated with the first component raw material and the second component raw material may be dried by an ordinarily used method.

In this way, the first component raw material and the second component raw material can be carried or adsorbed on the carrier containing titanium oxide and silicon oxide.

<Step 4>

In step 4, the catalyst precursor obtained in step 2 and step 3 or step 2A and having the first component raw material and the second component raw material carried on the carrier is calcinated.

The catalyst precursor can be calcinated by an ordinary method using various heaters. The calcination conditions are not particularly limited, and the calcination conditions applied to the calcination of the components can be applied without any particular limitation depending on the carried components. For example, the calcinating temperature may be 100 to 600°C, preferably 200 to 400°C, and the calcinating time may be 1 to 30 hours, preferably 1 to 10 hours.

<Other steps>

In a preferred method of producing the catalyst II, a step(s) other than the above steps 1 to 4 may be performed. Examples thereof include a step of drying the carrier brought into contact with the aqueous solution in the steps 2, 3, and 2A, a step of pulverizing and crushing the catalyst obtained in step 4, a step of adjusting the shape or size of the catalyst obtained in the step 4 (e.g., a step of classifying a pulverized and crushed catalyst).

In the production method of the present invention including the above steps, a nitrous oxide decomposition catalyst suitably used in the decomposition method of the present invention can be produced by a simple step. Specifically, the catalyst II (preferred embodiment), in which the first carried component and the second carried component are carried or adsorbed on a carrier containing titanium oxide and silicon oxide, may be produced by performing the above-described step 1 to step 4.

Note that when step 3 or step 2A is not performed, the catalyst II can be produced in which the first carried component is carried or adsorbed on a carrier containing titanium oxide and silicon oxide.

In addition, when the carrier raw material mixture is prepared without mixing silicon oxide with titanium oxide in step 1, the catalyst I can be produced in which the first carried component and the second carried component are carried or adsorbed on the carrier containing titanium oxide.

(Formation of washcoat layer)

In a preferred embodiment that the catalyst is disposed as a washcoat layer on a substrate having a honeycomb structure, the catalyst produced by the above method can be appropriately pulverized by pulverization, crushing, or the like, and then disposed on a substrate having a honeycomb structure, preferably as a washcoat layer, to produce the catalyst of the preferred embodiment. The washcoat layer of the catalyst may be applied and adhered to the substrate surface by any known means in the art. For example, the washcoat layer is formed by applying, on a substrate, a slurry containing a catalyst prepared to have a specific solid content (e.g., from about 30 to about 90 mass%) in a liquid such as water or alcohol by using a means such as spraying or impregnation, and drying the slurry. Note that the catalyst used for preparing the slurry may be a catalyst obtained by, for instance, pulverizing and crushing the catalyst produced by the above method.

[Nitrous oxide-containing gas]

The decomposition method of the present invention uses a nitrous oxide-containing gas containing nitrous oxide, water vapor and oxygen.

The nitrous oxide-containing gas may be a gas containing nitrous oxide, water vapor (water), and oxygen, and the nitrous oxide-containing gas may contain one or two or more gases other than the three gases of nitrous oxide, water vapor, and oxygen. Examples of such a gas include various gases such as ammonia, nitrogen, carbon dioxide, nitrogen monoxide, nitrogen dioxide, or an inert gas (helium, argon) as a dilution gas, and a reducing gas. The nitrous oxide-containing gas may contain a liquid. In the decomposition method of the present invention, the nitrous oxide-containing gas only needs to be a gas at least while being in contact with the above catalyst (under reaction conditions), and may be a liquid or a mixture of a gas and a liquid before contact.

The content (concentration) and a content ratio, of each component in the nitrous oxide-containing gas are not particularly limited and can be set, if appropriate. However, it is usually efficient to use the nitrous oxide-containing gas almost as it is with respect to a value specific to a factory from which the nitrous oxide-containing gas is discharged, except for a component having a special effect. Thus, for example, the mol concentration of nitrous oxide in the nitrous oxide-containing gas is generally and preferably from 0.002 to 10 mol%. The mol concentration of water vapor is generally and preferably from 0.1 to 10 mol%. The mol concentration of the oxygen gas in the nitrous oxide-containing gas is preferably 0.1 to 21 mol%. Note that the nitrous oxide-containing gas may also be obtained by mixing a plurality of gases each containing one or more of nitrous oxide-, water vapor-, and oxygen-containing gas. Examples of the oxygen-containing gas include air.

The nitrous oxide-containing gas may also contain an ammonia gas in order to further increase the nitrous oxide decomposition rate. The mol concentration of ammonia in the nitrous oxide-containing gas in this case is preferably 0.0002 mol% or more and preferably 1 mol% or less from the viewpoint of the efficiency of decomposing nitrous oxide. The mol concentration of ammonia is more preferably from 0.0002 to 0.5 mol%, and still more preferably from 0.0002 to 0.2 mol%.

The content ratio [ammonia/water vapor] of ammonia to water vapor contained in the nitrous oxide-containing gas is not particularly limited and can be set, if appropriate. However, the content ratio is preferably 0.0010 or more in terms of molar ratio from the viewpoint of the efficiency of decomposing nitrous oxide. The molar ratio is more preferably from 0.0010 to 0.050, and more preferably from 0.0010 to 0.030 and still more preferably from 0.0010 to 0.010 from the viewpoint of suppressing or avoiding the problem of remaining ammonia (discharging into the air and removal workability). In addition, the content ratio [ammonia/nitrous oxide] of ammonia to nitrous oxide contained in the nitrous oxide-containing gas is not particularly limited and can be set, if appropriate. However, the content ratio is preferably from 0.005 to 10 as a molar ratio. Further, the content of the oxygen gas in the nitrous oxide-containing gas is preferably 0.01 to 10000 mol times the content of ammonia within the above range.

In the decomposition method of the present invention capable of suppressing a decrease in the decomposition rate over a long period of time, the nitrous oxide-containing gas does not necessarily contain a reducing gas that improves the nitrous oxide decomposition rate. In the present invention, the phrase "the nitrous oxide-containing gas does not contain a reducing gas" includes, in addition to an embodiment in which the content of the reducing gas is 0 mol%, an embodiment in which the nitrous oxide-containing gas contains the reducing gas at a molar ratio of less than 0.005 with respect to the nitrous oxide.

Meanwhile, the nitrous oxide-containing gas may also contain a reducing gas in order to further increase the nitrous oxide decomposition rate. Similarly, in order to further increase the nitrous oxide decomposition rate, it is possible to include a saturated hydrocarbon gas that is reacts with oxygen contained in the nitrous oxide-containing gas or generated in a reactor to be a raw material for generating a reducing gas such as a carbon monoxide gas. In view of the nitrous oxide decomposition rate, a method of including a reducing gas in a nitrous oxide-containing gas is preferable. The reducing gas may be any reducing gas other than ammonia, and those used in a general catalytic reduction method can be used without any particular limitation. Examples thereof include an unsaturated hydrocarbon gas, such as ethylene, propylene, α-butylene and β-butylene, a carbon monoxide gas, a hydrogen gas, and a gas of alcohol compound, such as methanol, ethanol, propanol, and butanol. Among them, at least one kind of a carbon monoxide gas, unsaturated hydrocarbon gas and hydrogen gas is preferable. Examples of the saturated hydrocarbon gas as a raw material for generating a reducing gas, such as a carbon monoxide gas, include methane, ethane, propane, and n-butane. Examples of the preferred saturated hydrocarbon gas include ethane, propane, and n-butane. The saturated hydrocarbon gas may be included using a gas mixture, such as natural gas, liquefied natural gas, and liquefied petroleum gas.

The content of the reducing gas or the saturated hydrocarbon gas in the nitrous oxide-containing gas is not particularly limited, and can be set, if appropriate. For example, the mol concentration of the reducing gas or the saturated hydrocarbon gas in the nitrous oxide-containing gas is from 0.001 to 1 mol%. The molar ratio [reducing gas or saturated hydrocarbon gas/water vapor] of the reducing gas or the saturated hydrocarbon gas to water vapor in the nitrous oxide-containing gas is preferably from 0.0003 to 0.03. In addition, the content ratio [reducing gas or saturated hydrocarbon gas/nitrous oxide] of the reducing gas or saturated hydrocarbon gas to nitrous oxide contained in the nitrous oxide-containing gas is from 0.01 to 100 as a molar ratio.

In the present invention, the nitrous oxide-containing gas may be prepared by appropriately mixing nitrous oxide, water vapor, oxygen, ammonia, and the above-mentioned gases other than these. In addition, various exhaust gases discharged from a chemical production plant, and further exhaust gases discharged from automobiles, power plants using ammonia fuel, and ships may be used. For example, a gas discharged from a chemical production plant, such as a nitric acid production plant, an ε-caprolactam production plant, and an adipic acid production plant, often contains water vapor, oxygen gas, and ammonia in addition to nitrous oxide, and can be effectively utilized in the decomposition method of the present invention. In particular, when the exhaust gas satisfy the content and the content ratio in the above ranges, it is preferable from the viewpoint that the decomposition method of the present invention can be directly applied without adjusting the content or the like.

[Contact step]

The decomposition method of the present invention includes bringing the catalyst into contact with the nitrous oxide-containing gas (contact step).

The contact step may be a step of bringing the catalyst into contact with a nitrous oxide-containing gas, and a contact step in the known method of decomposing nitrous oxide may be used. Examples of the contact step in the known method of decomposing nitrous oxide include a method (step) described in Patent Literature 1 in which a catalyst and nitrous oxide are brought into contact with each other in the co-presence of a reducing gas. In addition, the contact step may also be performed by the step of allowing a nitrous oxide-containing gas to flow through a catalyst packed reaction tube. In this way, both can be brought into contact with each other. The method of bringing the nitrous oxide-containing gas into contact with the catalyst may be a batch type or a continuous type, and is preferably a continuous type from the viewpoint of reaction efficiency, and furthermore, from the viewpoint of effectively exploiting the effect of the present invention so that the catalytic activity can be maintained for a long period of time. Examples of the continuous type include a fixed bed type and a fluidized bed type.

In the contact step, nitrous oxide in the nitrous oxide-containing gas comes into contact with the catalyst. Accordingly, even in the co-presence of water vapor, a nitrous oxide-decomposing reaction shown in the following formula occurs. As a result, the nitrous oxide is efficiently decomposed into nitrogen molecules and oxygen molecules.

Nitrous oxide-decomposing reaction: $N_2O \rightarrow N_2 + 1/2O_2$

When the nitrous oxide-containing gas contains ammonia, the ammonia further promotes the nitrous oxide decomposition reaction. Details of the mechanism of action are not yet clear, but are considered as follows. For example, in the presence of a catalyst exhibiting a reducing action, such as a ruthenium-carrying catalyst, it is presumed that ammonia reacts with nitrous oxide on the surface of the catalyst, whereby nitrous oxide is decomposed into nitrogen molecules and water molecules to be able to further promote the nitrous oxide-decomposing reaction. On the other hand, in the presence of a catalyst that does not exhibit a reducing action, such as a ruthenium oxide-carrying catalyst, it is presumed that oxygen atoms are removed from the catalyst surface by reacting with oxygen atoms remaining on the catalyst surface to maintain the catalytic activity (suppress deactivation of the catalyst), so that the decomposition reaction can be promoted.

When a known step is applied as the contact step, an appropriate method and conditions that can be employed in each step can be used, if appropriate, as the contact method and the contact conditions. Examples thereof include the following conditions.

The contact temperature (reaction temperature) is determined, if appropriate, but is preferably 500°C or lower from the viewpoint of catalyst activity deterioration, and is preferably 100°C or higher from the viewpoint of reaction rate. The contact temperature is preferably from 200 to 450°C and more preferably from 250 to 400°C.

In the continuous contact method, the rate of supplying the nitrous oxide-containing gas with respect to the mass of the catalyst is not particularly limited and is determined, if appropriate. For example, the flow rate at 0°C and 0.1013 MPa (absolute) based on 1 g of the catalyst is preferably from 10 to 10000 $cm^3$/min and more preferably from 50 to 5000 $cm^3$/min.

The contact time is determined, if appropriate, according to the concentration of nitrous oxide in the nitrous oxide-containing gas or its supply rate, the contact temperature, and others. In the decomposition method of the present invention, the catalytic activity can be maintained for a long period. Thus, the contact time can be set to be long, for example, 0.3 seconds or more.

The reaction pressure varies depending on, for instance, the contact temperature, the rate of supplying the nitrous oxide-containing gas, or the pressure of the outside air around the reactor. The reaction pressure is preferably a pressure higher than the outside air pressure, and is preferably from 0.08 to 1 MPa (absolute) as an absolute pressure, and more preferably from 0.09 to 0.7 MPa (absolute) as an absolute pressure.

<Other steps>

The decomposition method of the present invention may include a step(s) other than the contact step. Examples thereof include a step of adjusting the content of a component(s) in the nitrous oxide-containing gas and/or a step of introducing an ammonia gas or a reducing gas into the nitrous oxide-containing gas.

In the decomposition method of the present invention, nitrous oxide can be decomposed for a long period of time while maintaining the nitrous oxide decomposition rate, and nitrous oxide can be efficiently decomposed for a long period of time (at a high decomposition rate). In particular, in the continuous type, in which the effect of the present invention can be effectively exploited so that catalytic activity can be maintained for a long period of time, nitrous oxide can be efficiently decomposed over a long period of time by a simple step of circulating (passing) a nitrous oxide-containing gas through the catalyst.

The decomposition method of the present invention can be used in various fields and applications for decomposing and removing nitrous oxide. For example, the method can be used in exhaust gas processing in chemical production plants, automobiles, power plants using ammonia fuel, and/or ships. In particular, the method can be suitably used in a chemical production plant, such as a nitric acid production plant, an ε-caprolactam production plant, and an adipic acid production plant, that discharges a nitrous oxide-containing gas containing nitrous oxide, water vapor, and oxygen.

When the present decomposition method is applied to an existing production plant, the position, where the apparatus for implementing the present decomposition method is installed, is not particularly limited. Here, the decomposition apparatus is usually incorporated in the last stage in the flowing direction of the exhaust gas, for example, in a stage before the discharge tower. Specifically, in the case of a nitric acid production plant, the apparatus is incorporated in a stage after the denitration reactor. As described above, the apparatus for performing the decomposition method of the present invention can be easily installed in an existing production plant, and the existing production plant can be effectively used.

{EXAMPLES}

Hereinafter, Examples of the present invention will be described. The present invention, however, is not limited thereto.

[Example 1]

Nitrous oxide decomposition catalysts corresponding to the catalyst I were produced in the following manner, and these catalysts were subjected to forced degradation treatment and then used for a nitrous oxide decomposition reaction to evaluate the nitrous oxide decomposition rate.

<Calculating decomposition rate of nitrous oxide concentration>

To calculate the decomposition rate of a nitrous oxide concentration, the content $C_B$ of nitrous oxide in the nitrous oxide-containing gas (used for the decomposition of nitrous oxide) and the content $C_A$ of nitrous oxide in the reaction outlet gas (post-reaction gas) were analyzed (measured) using gas chromatography (GC-2014 (detector: TCD, column: SHINCARBON-ST50/80 4m), manufactured by SHIMADZU Corporation), and the decomposition rate of a nitrous oxide concentration (sometimes simply referred to as "nitrous oxide decomposition rate") was calculated from the analyzed nitrous oxide concentrations by the following formula:

Decomposition rate X (%) of nitrous oxide concentration = $[(Cs - C_A)/C_B] \times 100$.

<Working Example 1>

(Catalyst 1: Production of $ZrO_2$-$RuO_2$/$TiO_2$ catalyst)

First, 100 parts by mass of titanium oxide powder (manufactured by Showadenkosya Co., Ltd.) and 2 parts by mass of an organic binder (YB-152A (trade name) manufactured by YUKEN INDUSTRY CO., LTD.) were mixed, and 29 parts by mass of pure water and 12.5 parts by mass of titanium oxide sol (CSB (trade name) manufactured by SAKAI CHEMICAL INDUSTRY CO., LTD., titanium oxide content in titanium oxide sol: 40 mass%, 100% anatase crystalline form) were then added and kneaded. The mixture was extruded into a noodle shape having a diameter of 3.0 mm, dried at 60°C for 2 hours, and then crushed to a length of about 3 to 5 mm. The resulting carrier precursor 1 was heated in air from room temperature to 600°C over 1.7 hours, and then held at 600°C for 3 hours and calcinated to obtain a carrier 1 formed of white titanium oxide (rutile crystal form $TiO_2$ ratio of 90% or more) (step 1: provided that silicon oxide was not used for the preparation of the carrier raw material mixture).

Next, 0.2 g of ruthenium chloride hydrate ($RuCl_3 \cdot nH_2O$, Ru content: 40%, manufactured by Furuya Metal Co., Ltd.) and 0.1 g of zirconium oxynitrate dihydrate ($ZrO(NO_3)_2 \cdot 2H_2O$, manufactured by Kishida Chemical Co., Ltd., Zr content: 34%) were dissolved in 2.3 g of ion-exchanged water. By an incipient wetness method, 10.0 g of the carrier 1 formed of titanium oxide was impregnated with the obtained aqueous solution at a temperature of 25°C, and then air-dried at room temperature (25°C) overnight in an air atmosphere to obtain a catalyst precursor 1 carrying ruthenium chloride hydrate and zirconium oxynitrate dihydrate (step 2A).

This catalyst precursor 1 (10g) was filled into a quartz glass tube (internal diameter: 27 mm) equipped with a sheath tube for measuring an internal temperature. The temperature was then raised to a furnace temperature of 250°C under air flow at 200 $cm^3$ (0°C, 0.1013 MPa (absolute))/min by using an electric tube furnace. Subsequently, the catalyst precursor 1 was held at the same temperature for 2 hours for calcination. The temperature in the quartz glass tube at an electric tube furnace temperature of 250°C was 300°C to afford a $ZrO_2$-$RuO_2$/$TiO_2$ catalyst containing 1.3 mass% of ruthenium oxide (1.0 mass% as ruthenium element) and 0.6 mass% of zirconium oxide (molar ratio of zirconium element content/ruthenium element content = 0.5) (step 4). The resulting columnar pellet-shaped $ZrO_2$-$RuO_2$/$TiO_2$ catalyst was pulverized and sieved into 0.7- to 1.0-mm granules to produce a catalyst 1.

(Forced degradation treatment)

First, 0.9 g (1.0 $cm^3$) of the obtained catalyst 1 was filled in a stainless steel reaction tube (inner diameter: 8 mm) equipped with a thermocouple for measuring the internal temperature. The reaction tube was placed in an electric furnace, a mixed gas containing 3.0 mol% of oxygen, 0.7 mol% of water vapor, and balance nitrogen (flow rate: 435 $cm^3$ (0°C, 0.1013 MPa (absolute))/min) was circulated at normal pressure (0.1 MPa (absolute)), and the internal temperature of the stainless steel reaction tube was raised to 340°C. Next, the same temperature was maintained for 24 hours to perform forced degradation treatment at 340°C. Thus, the catalyst 1, which had been subjected to the forced degradation treatment, was obtained.

(Nitrous oxide decomposition reaction using catalyst 1 after forced degradation treatment)

The mixed gas flowing through the stainless steel reaction tube filled with the catalyst 1 after the forced degradation treatment was switched to a mixed gas containing 0.18 mol% of nitrous oxide, 3.0 mol% of oxygen, 0.7 mol% of water vapor, and balance nitrogen (flow rate: 435 $cm^3$ (0°C, 0.1013 MPa (absolute))/min) at normal pressure (0.1 MPa (absolute)). The internal temperature of the stainless steel reaction tube was adjusted to 320°C and maintained at 320°C for 0.5 hours. Thereafter, the post-reaction gas discharged from the stainless steel reaction tube was collected in a gas sampling bag. The collected post-reaction gas was analyzed using gas chromatography as described above, and the decomposition rate of a nitrous oxide concentration (nitrous oxide decomposition rate) was calculated. The results are shown in Table 1.

<Working Example 2>

(Catalyst 2: Production of $CeO_2$-$RuO_2$/$TiO_2$ catalyst)

The same procedure as in Working Example 1 was repeated, except that zirconium oxynitrate was changed to 0.3 g of cerium nitrate hexahydrate ($Ce(NO_3)_3 \cdot 6H_2O$, manufactured by FUJIFILM Wako Pure Chemical Corporation, Ce content: 32 mass%) in the aqueous solution used in step 2A, to afford a $CeO_2$-$RuO_2$/$TiO_2$ catalyst containing 1.3 mass% of ruthenium oxide (1.0 mass% as ruthenium element) and 0.8 mass% of cerium oxide (molar ratio of cerium element content/ruthenium element content = 0.5). The resulting columnar pellet-shaped $CeO_2$-$RuO_2$/$TiO_2$ catalyst was pulverized and sieved into 0.7- to 1.0-mm granules to produce a catalyst 2.

(Nitrous oxide decomposition reaction using catalyst 2 after forced degradation treatment)

Using this catalyst 2, forced degradation treatment and nitrous oxide decomposition reaction were performed in the same manner as in Working Example 1, and the decomposition rate of the nitrous oxide concentration after the forced degradation treatment was calculated. The results are shown in Table 1.

<Working Example 3>

(Catalyst 3: Production of $Sb_2O_3$-$RuO_2$/$TiO_2$ catalyst 3)

The same procedure as in Working Example 1 was repeated, except that zirconium oxynitrate was changed to 0.1 g of antimony chloride ($SbCl_3$, manufactured by FUJIFILM Wako Pure Chemical Corporation, Sb content: 53 mass%) in the aqueous solution used in step 2A, to afford a $Sb_2O_3$-$RuO_2$/$TiO_2$ catalyst containing 1.3 mass% of ruthenium oxide (1.0 mass% as ruthenium element) and 0.7 mass% of antimony trioxide (molar ratio of antimony element content/ruthenium element content = 0.5). The resulting columnar pellet-shaped $Sb_2O_3$-$RuO_2$/$TiO_2$ catalyst was pulverized and sieved into 0.7- to 1.0-mm granules to produce a catalyst 3.

(Nitrous oxide decomposition reaction using catalyst 3 after forced degradation treatment)

Using this catalyst 3, forced degradation treatment and nitrous oxide decomposition reaction were performed in the same manner as in Working Example 1, and the decomposition rate of the nitrous oxide concentration after the forced degradation treatment was calculated. The results are shown in Table 1.

<Working Example 4>

(Catalyst 4: Production of $SiO_2$-$RuO_2$/$TiO_2$ catalyst)

First, 60.0 g of the carrier 1 formed of titanium oxide obtained in Working Example 1 was placed in a 200-mL recovery flask, which was set in a rotary impregnation-drying apparatus. While the recovery flask was inclined by 60 degrees from the vertical direction and rotated at 80 rpm, a solution prepared by dissolving 2.13 g of tetraethoxysilane ($Si(OC_2H_5)_4$ manufactured by Wako Pure Chemical Industries, Ltd.) in 9.22 g of ethanol at a temperature of 25°C was added dropwise into the recovery flask over 20 minutes to impregnate the titanium oxide carrier with the solution. Next, while stirring the carrier 1 by rotating the recovery flask containing the carrier 1 after impregnation at 80 rpm, the temperature in the recovery flask was set to 30°C, and a mixed gas containing water vapor and nitrogen (water vapor concentration: 2.0 vol%) was continuously supplied into the recovery flask at a flow rate of 277 mL/min (in terms of 0°C and 0.1 MPa) for 4 hours and 20 minutes and circulated, so that the carrier 1 after impregnation was dried. Then, 62.3 g of the obtained dried material was heated from room temperature to 300°C over 1.2 hours under air circulation, and then held and calcinated at the same temperature for 2 hours to obtain 60.6 g of a solid (silicon oxide-carrying titanium oxide carrier) in which silicon oxide was supported on the titanium oxide carrier (step 3).
After that, 30.1 g of the obtained silicon oxide-carrying titanium oxide carrier was placed in a 200-mL recovery flask, which was set in a rotary impregnation-drying apparatus. While the recovery flask was inclined by 60 degrees from the vertical direction at a temperature of 25°C and rotated at 80 rpm, an aqueous solution prepared by dissolving 0.71 g of ruthenium chloride hydrate ($RuCl_3 \cdot nH_2O$, Ru content: 40%, manufactured by Furuya Metal Co., Ltd.) in 6.89 g of pure water was added dropwise to the recovery flask over 30 minutes for impregnation with the aqueous solution. Thus, 37.70 g of a ruthenium chloride-carrying material was obtained. Next, while stirring the ruthenium chloride-carrying material by rotating the recovery flask containing the ruthenium chloride-carrying material at 80 rpm, the temperature in the recovery flask was set to 35°C, and an air was continuously supplied into the recovery flask at a flow rate of 692 mL/min (in terms of 0°C and 0.1 MPa) for 3 hours and 40 minutes and circulated for drying. Thus, 32.21 g of a catalyst precursor 4 was obtained (step 2).
Then, 32.21 g of the catalyst precursor 4 was placed in a sealed container and held at 20°C for 120 hours in a thermostatic bath. The mass of the catalyst precursor 4 after holding was 32.21 g. The amount of water based on the mass of the silicon oxide-carrying titanium oxide carrier contained in the catalyst precursor 4 after holding was not changed from that before holding, and the amount of water evaporated was 0 g. After that, 21.48 g of the post-holding catalyst precursor 4 was heated from room temperature to 280°C over 1.2 hours under air circulation, and then held and calcinated at the same temperature for 2 hours to afford a $SiO_2$-$RuO_2$/$TiO_2$ catalyst containing 1.3 mass% of ruthenium oxide (1.0 mass% as ruthenium element) and 0.8 mass% of silicon oxide (molar ratio of silicon element content/ruthenium element content = 1.3) (step 4). The resulting columnar pellet-shaped $SiO_2$-$RuO_2$/$TiO_2$ catalyst was pulverized and sieved into 0.7- to 1.0-mm granules to produce a catalyst 4.

(Nitrous oxide decomposition reaction using catalyst 4 after forced degradation treatment)

Using this catalyst 4, forced degradation treatment and nitrous oxide decomposition reaction were performed in the same manner as in Working Example 1, and the decomposition rate of the nitrous oxide concentration after the forced degradation treatment was calculated. The results are shown in Table 1.

<Comparative Example 1>

(Catalyst 5: Production of $RuO_2/TiO_2$ catalyst)

A $RuO_2/TiO_2$ catalyst containing 1.3 mass% of ruthenium oxide (1.0 mass% as ruthenium element) was obtained in the same manner as in Working Example 1, except that ruthenium chloride hydrate was supported on the carrier 1 obtained in Working Example 1 while using an aqueous solution containing only 0.2 g of ruthenium chloride hydrate ($RuCl_3 \cdot nH_2O$, Ru content: 40%, manufactured by Furuya Metal Co., Ltd.) as step 2. The resulting columnar pellet-shaped $RuO_2/TiO_2$ catalyst was pulverized and sieved into 0.7- to 1.0-mm granules to produce a catalyst 5.

(Nitrous oxide decomposition reaction using catalyst 5 after forced degradation treatment)

Using this catalyst 5, forced degradation treatment and nitrous oxide decomposition reaction were performed in the same manner as in Working Example 1, and the decomposition rate of the nitrous oxide concentration after the forced degradation treatment was calculated. The results are shown in Table 1.

[Table 1]

|  | WEx. 1 | WEx. 2 | WEx. 3 | WEx. 4 | CEx. 1 |
|---|---|---|---|---|---|
| Catalyst | Catalyst 1 | Catalyst 2 | Catalyst 3 | Catalyst 4 | Catalyst 5 |
| Content (mass%) of ruthenium element in catalyst | 1.0 | 1.0 | 1.0 | 1.0 | 1.0 |
| Content (mass%) of zirconium element in catalyst | 0.4 | 0 | 0 | 0 | 0 |
| Content (mass%) of cerium element in catalyst | 0 | 0.7 | 0 | 0 | 0 |
| Content (mass%) of antimony element in catalyst | 0 | 0 | 0.6 | 0 | 0 |
| Content (mass%) of silicon element in catalyst | 0 | 0 | 0 | 0.4 | 0 |
| Molar ratio in catalyst | 0.5 | 0.5 | 0.5 | 1.3 | 0 |
| Nitrous oxide decomposition rate (%) after forced degradation | 13 | 12 | 11 | 14 | 9 |
| Remarks: 'WEx.' means Working Example according to this invention, and 'CEx.' means Comparative Example. | | | | | |

Working Examples 1 to 4 each correspond to an Example of the decomposition method using catalyst I according to the present invention.

The "Molar ratio in catalyst" in Table 1 represents the molar ratio of the content of the metal element (zirconium element, cerium element, antimony element, or silicon element) contained in the second carried component to the content of the ruthenium element contained in the first carried component [content (mol) of metal element/content (mol) of ruthenium element] in the catalyst.

<Working Example 5>

(Catalyst 6: Production of $ZrO_2$-$RuO_2/TiO_2$ catalyst)

First, 12 parts by mass of an organic binder and 35 parts by mass of water were each added to 100 parts by mass of titanium oxide powder (manufactured by Showa Denko Ceramics Co., Ltd.), and were mixed and kneaded to prepare a kneaded material. METOLOSE (manufactured by Shin-Etsu Chemical Co., Ltd.) and UNILUBE (manufactured by NOF CORPORATION) were used as the organic binder. The obtained kneaded material was molded using a vacuum extruder to obtain a honeycomb formed body (cubic shape with a length of 20 mm, a width of 20 mm, and a height of 20 mm; through-holes were arranged in parallel in the vertical and horizontal directions; the volume ratio: 36%; the opening shape of each through-hole is a quadrangle; the cell size: 1.4 mm; the thickness of the inner wall: 0.35 mm; the opening ratio: 64%; and 100% rutile crystal form $TiO_2$). The resulting honeycomb formed body was air-dried at room temperature for 2 days to produce a carrier precursor 2. The carrier precursor 2 was calcinated at 600°C for 2 hours by using an electric furnace to afford a carrier 2 having a honeycomb structure (the honeycomb structure retained the shape and dimensions of the honeycomb formed body) (step 1: provided that silicon oxide was not used for the preparation of the carrier raw material mixture).

Next, the carrier 2 (7 g) was impregnated at 25°C with an aqueous solution (about 40 mL) containing 4.2 g of ruthenium chloride hydrate ($RuCl_3 \cdot nH_2O$, Ru content: 40%, manufactured by Furuya Metal Co., Ltd.) and 1.0 g of zirconium oxynitrate dihydrate (ZrO(NO$_3$)$_2$·2H$_2$O, manufactured by Kishida Chemical Co., Ltd., Zr content: 34%). After 10 minutes, the carrier 2 was pulled up from the aqueous solution, and excess liquid was blown off by air blow. Thereafter, the obtained carrier 2 was allowed to stand on a laboratory table at room temperature (about 20°C) and air-dried until the weight loss disappeared. Thus, a catalyst precursor 6 was obtained (step 2A).

This catalyst precursor 6 was calcinated at 290°C for 2 hours by using an electric furnace to afford a ZrO$_2$-RuO$_2$/TiO$_2$ catalyst containing 2.6 mass% of ruthenium oxide (2.0 mass% as ruthenium element) and 0.6 mass% of zirconium oxide (molar ratio of zirconium element content/ruthenium element content = 0.2) (step 4). The resulting honeycomb-shaped ZrO$_2$-RuO$_2$/TiO$_2$ catalyst was pulverized and sieved into 0.7- to 1.0-mm granules to produce a catalyst 6. (Nitrous oxide decomposition reaction using catalyst 6 after forced degradation treatment)

Using this catalyst 6, forced degradation treatment and nitrous oxide decomposition reaction were performed in the same manner as in Working Example 1, and the decomposition rate of the nitrous oxide concentration after the forced degradation treatment was calculated. The results are shown in Table 2.

<Working Example 6>

(Catalyst 7: Production of ZrO$_2$-RuO$_2$/TiO$_2$ catalyst)

The same procedure as in Working Example 5 was repeated, except that an aqueous solution prepared by changing only the mass of zirconium oxynitrate dihydrate (ZrO(NO$_3$)$_2$·2H$_2$O, manufactured by Kishida Chemical Co., Ltd., Zr content: 34%) to 2.1 g in the aqueous solution used in step 2A was used, to afford a ZrO$_2$-RuO$_2$/TiO$_2$ catalyst containing 2.6 mass% of ruthenium oxide (2.0 mass% as ruthenium element) and 1.1 mass% of zirconium oxide (molar ratio of zirconium element content/ruthenium element content = 0.5). The resulting honeycomb-shaped ZrO$_2$-RuO$_2$/TiO$_2$ catalyst was pulverized and sieved into 0.7-to 1.0-mm granules to produce a catalyst 7.

(Nitrous oxide decomposition reaction using catalyst 7 after forced degradation treatment)

Using this catalyst 7, forced degradation treatment and nitrous oxide decomposition reaction were performed in the same manner as in Working Example 1, and the decomposition rate of the nitrous oxide concentration after the forced degradation treatment was calculated. The results are shown in Table 2.

<Working Example 7>

(Catalyst 8: Production of ZrO$_2$-RuO$_2$/TiO$_2$ catalyst)

The same procedure as in Working Example 5 was repeated, except that an aqueous solution prepared by changing only the mass of zirconium oxynitrate dihydrate (ZrO(NO$_3$)$_2$·2H$_2$O, manufactured by Kishida Chemical Co., Ltd., Zr content: 34%) to 4.5 g in the aqueous solution used in step 2A was used, to afford a ZrO$_2$-RuO$_2$/TiO$_2$ catalyst containing 2.6 mass% of ruthenium oxide (2.0 mass% as ruthenium element) and 2.2 mass% of zirconium oxide (molar ratio of zirconium element content/ruthenium element content = 0.9). The resulting honeycomb-shaped ZrO$_2$-RuO$_2$/TiO$_2$ catalyst was pulverized and sieved into 0.7-to 1.0-mm granules to produce a catalyst 8.

(Nitrous oxide decomposition reaction using catalyst 8 after forced degradation treatment)

Using this catalyst 8, forced degradation treatment and nitrous oxide decomposition reaction were performed in the same manner as in Working Example 1, and the decomposition rate of the nitrous oxide concentration after the forced degradation treatment was calculated. The results are shown in Table 2.

<Working Example 8>

(Catalyst 9: Production of ZrO$_2$-RuO$_2$/TiO$_2$ catalyst)

The same procedure as in Working Example 5 was repeated, except that an aqueous solution prepared by changing only the mass of zirconium oxynitrate dihydrate (ZrO(NO$_3$)$_2$·2H$_2$O, manufactured by Kishida Chemical Co., Ltd., Zr content: 34%) to 7.3 g in the aqueous solution used in step 2A was used, to afford a ZrO$_2$-RuO$_2$/TiO$_2$ catalyst containing 2.6 mass% of ruthenium oxide (2.0 mass% as ruthenium element) and 3.3 mass% of zirconium oxide (molar ratio of zirconium element content/ruthenium element content = 1.4). The resulting honeycomb-shaped ZrO$_2$-RuO$_2$/TiO$_2$ catalyst was pulverized and sieved into 0.7-to 1.0-mm granules to produce a catalyst 9.

(Nitrous oxide decomposition reaction using catalyst 9 after forced degradation treatment)

Using this catalyst 9, forced degradation treatment and nitrous oxide decomposition reaction were performed in the same manner as in Working Example 1, and the decomposition rate of the nitrous oxide concentration after the forced degradation treatment was calculated. The results are shown in Table 2.

<Working Example 9>

(Catalyst 10: Production of $ZrO_2$-$RuO_2$/$TiO_2$ catalyst)

The same procedure as in Working Example 5 was repeated, except that an aqueous solution prepared by changing only the mass of zirconium oxynitrate dihydrate ($ZrO(NO_3)_2 \cdot 2H_2O$, manufactured by Kishida Chemical Co., Ltd., Zr content: 34%) to 8.3 g in the aqueous solution used in step 2A was used, to afford a $ZrO_2$-$RuO_2$/$TiO_2$ catalyst containing 2.6 mass% of ruthenium oxide (2.0 mass% as ruthenium element) and 5.0 mass% of zirconium oxide (molar ratio of zirconium element content/ruthenium element content = 2.1). The resulting honeycomb-shaped $ZrO_2$-$RuO_2$/$TiO_2$ catalyst was pulverized and sieved into 0.7-to 1.0-mm granules to produce a catalyst 10.

(Nitrous oxide decomposition reaction using catalyst 10 after forced degradation treatment)

Using this catalyst 10, forced degradation treatment and nitrous oxide decomposition reaction were performed in the same manner as in Working Example 1, and the decomposition rate of the nitrous oxide concentration after the forced degradation treatment was calculated. The results are shown in Table 2.

<Comparative Example 2>

(Catalyst 11: Production of $RuO_2$/$TiO_2$ catalyst)

A $RuO_2$/$TiO_2$ catalyst containing 2.6 mass% of ruthenium oxide (2.0 mass% as ruthenium element) was obtained in the same manner as in Working Example 5, except that an aqueous solution containing only 4.2 g of ruthenium chloride hydrate ($RuCl_3 \cdot nH_2O$, Ru content: 40%, manufactured by Furuya Metal Co., Ltd.) was used as step 2. The resulting honeycomb-shaped $RuO_2$/$TiO_2$ catalyst was pulverized and sieved into 0.7- to 1.0-mm granules to produce a catalyst 11.

(Nitrous oxide decomposition reaction using catalyst 11 after forced degradation treatment)

Using this catalyst 11, forced degradation treatment and nitrous oxide decomposition reaction were performed in the same manner as in Working Example 1, and the decomposition rate of the nitrous oxide concentration after the forced degradation treatment was calculated. The results are shown in Table 2.

[Table 2]

|  | WEx. 5 | WEx. 6 | WEx. 7 | WEx. 8 | WEx. 9 | CEx. 2 |
|---|---|---|---|---|---|---|
| Catalyst | Catalyst 6 | Catalyst 7 | Catalyst 8 | Catalyst 9 | Catalyst 10 | Catalyst 11 |
| Content (mass%) of ruthenium element in catalyst | 2.0 | 2.0 | 2.0 | 2.0 | 2.0 | 2.0 |
| Content (mass%) of zirconium element in catalyst | 0.4 | 0.8 | 1.6 | 2.4 | 3.7 | 0 |
| Molar ratio in catalyst | 0.2 | 0.5 | 0.9 | 1.4 | 2.1 | 0 |
| Nitrous oxide decomposition rate (%) after forced degradation | 21 | 23 | 19 | 17 | 16 | 11 |
| Remarks: 'WEx.' means Working Example according to this invention, and 'CEx.' means Comparative Example. | | | | | | |

Working Examples 5 to 9 each correspond to an Example of the decomposition method using catalyst I according to the present invention.

The "Molar ratio in catalyst" in Table 2 represents the molar ratio of the content of the metal element (zirconium element) contained in the second carried component to the content of the ruthenium element contained in the first carried component [content (mol) of metal element/content (mol) of ruthenium element] in the catalyst.

<Working Example 10>

(Catalyst 12: Production of $ZrO_2$-$RuO_2$/$TiO_2$ catalyst)

The same procedure as in Working Example 5 was repeated, except that an aqueous solution prepared by changing only the mass of ruthenium chloride hydrate ($RuCl_3 \cdot nH_2O$, Ru content: 40%, manufactured by Furuya Metal Co., Ltd.) to 2.9 g in the aqueous solution used in step 2A was used, to afford a $ZrO_2$-$RuO_2$/$TiO_2$ catalyst containing 1.8 mass% of ruthenium oxide (1.4 mass% as ruthenium element) and 0.6 mass% of zirconium oxide (molar ratio of zirconium element content/ruthenium element content = 0.4). The resulting honeycomb-shaped $ZrO_2$-$RuO_2$/$TiO_2$ catalyst was pulverized and sieved into 0.7- to 1.0-mm granules to produce a catalyst 12.

(Nitrous oxide decomposition reaction using catalyst 12 after forced degradation treatment)

Using this catalyst 12, forced degradation treatment and nitrous oxide decomposition reaction were performed in the same manner as in Working Example 1, and the decomposition rate of the nitrous oxide concentration after the forced degradation treatment was calculated. The results are shown in Table 3.

<Working Example 11>

(Catalyst 13: Production of $ZrO_2$-$RuO_2$/$TiO_2$ catalyst)

The same procedure as in Working Example 5 was repeated, except that an aqueous solution prepared by changing only the mass of ruthenium chloride hydrate ($RuCl_3 \cdot nH_2O$, Ru content: 40%, manufactured by Furuya Metal Co., Ltd.) to 6.3 g in the aqueous solution used in step 2A was used, to afford a $ZrO_2$-$RuO_2$/$TiO_2$ catalyst containing 3.9 mass% of ruthenium oxide (3.0 mass% as ruthenium element) and 0.6 mass% of zirconium oxide (molar ratio of zirconium element content/ruthenium element content = 0.2). The resulting honeycomb-shaped $ZrO_2$-$RuO_2$/$TiO_2$ catalyst was pulverized and sieved into 0.7- to 1.0-mm granules to produce a catalyst 13.

(Nitrous oxide decomposition reaction using catalyst 13 after forced degradation treatment)

Using this catalyst 13, forced degradation treatment and nitrous oxide decomposition reaction were performed in the same manner as in Working Example 1, and the decomposition rate of the nitrous oxide concentration after the forced degradation treatment was calculated. The results are shown in Table 3.

<Working Example 12>

(Catalyst 14: Production of $ZrO_2$-$RuO_2$/$TiO_2$ catalyst)

The same procedure as in Working Example 5 was repeated, except that an aqueous solution prepared by changing only the mass of ruthenium chloride hydrate ($RuCl_3 \cdot nH_2O$, Ru content: 40%, manufactured by Furuya Metal Co., Ltd.) to 11.4 g in the aqueous solution used in step 2A was used, to afford a $ZrO_2$-$RuO_2$/$TiO_2$ catalyst containing 7.0 mass% of ruthenium oxide (5.3 mass% as ruthenium element) and 0.6 mass% of zirconium oxide (molar ratio of zirconium element content/ruthenium element content = 0.1). The resulting honeycomb-shaped $ZrO_2$-$RuO_2$/$TiO_2$ catalyst was pulverized and sieved into 0.7- to 1.0-mm granules to produce a catalyst 14.

(Nitrous oxide decomposition reaction using catalyst 14 after forced degradation treatment)

Using this catalyst 14, forced degradation treatment and nitrous oxide decomposition reaction were performed in the same manner as in Working Example 1, and the decomposition rate of the nitrous oxide concentration after the forced degradation treatment was calculated. The results are shown in Table 3.
The results of Working Example 1, Working Example 5, Comparative Example 1, and Comparative Example 2 are also shown in Table 3.

[Table 3]

| | WEx. 1 | WEx. 10 | WEx. 5 | WEx. 11 | WEx. 12 | CEx. 1 | CEx. 2 |
|---|---|---|---|---|---|---|---|
| Catalyst | Catalyst 1 | Catalyst 12 | Catalyst 6 | Catalyst 13 | Catalyst 14 | Catalyst 5 | Catalyst 11 |
| Content (mass%) of ruthenium element in catalyst | 1.0 | 1.4 | 2.0 | 3.0 | 5.3 | 1.0 | 2.0 |
| Content (mass%) of zirconium element in catalyst | 0.4 | 0.4 | 0.4 | 0.4 | 0.4 | 0 | 0 |
| Molar ratio in catalyst | 0.5 | 0.4 | 0.2 | 0.2 | 0.1 | 0 | 0 |
| Nitrous oxide decomposition rate (%) after forced degradation | 13 | 18 | 21 | 28 | 31 | 9 | 11 |
| Remarks: 'WEx.' means Working Example according to this invention, and 'CEx.' means Comparative Example. | | | | | | | |

Working Examples 10 to 12 each correspond to an Example of the decomposition method using catalyst I according to the present invention.

The "Molar ratio in catalyst" in Table 3 represents the molar ratio of the content of the metal element (zirconium element) contained in the second carried component to the content of the ruthenium element contained in the first carried component [content (mol) of metal element/content (mol) of ruthenium element] in the catalyst.

[Example 2]

Nitrous oxide decomposition catalysts corresponding to the catalyst II were produced in the following manner, and these catalysts were used for a nitrous oxide decomposition reaction to evaluate the nitrous oxide decomposition rate.

< Calculating decomposition rate of nitrous oxide concentration>

To calculate the decomposition rate of a nitrous oxide concentration, the content $C_B$ of nitrous oxide in the nitrous oxide-containing gas (used for the decomposition of nitrous oxide) and the content $C_A$ of nitrous oxide in the reaction outlet gas (post-reaction gas) were analyzed (measured) using gas chromatography (Micro GC (detector: Micro TCD, column: CP-PoraPLOT Q 10m) manufactured by VARIAN), and the decomposition rate of a nitrous oxide concentration (nitrous oxide decomposition rate) was calculated from the analyzed nitrous oxide concentrations by the following formula:

Decomposition rate (%) of nitrous oxide concentration = $[(Cs - C_A)/C_B] \times 100$.

<Working Example 13>

(Catalyst 15: Production of $RuO_2/SiO_2$-containing $TiO_2$ catalyst)

First, 12 parts by mass of an organic binder, 24.6 parts by mass of water, and 17.5 parts by mass of silica sol were each added to 100 parts by mass of titanium oxide powder (manufactured by Showa Denko Ceramics Co., Ltd.), and were mixed and kneaded to prepare a kneaded material. METOLOSE (manufactured by Shin-Etsu Chemical Co., Ltd.) and UNILUBE (manufactured by NOF CORPORATION) were used as the organic binder. As the silica sol, SNOWTEX ST-CM (manufactured by Nissan Chemical Corporation, particle diameter: 22 nm, solid content: 30 mass%) was used. The obtained kneaded material was molded using a vacuum extruder to obtain a honeycomb formed body (cubic shape with a length of 20 mm, a width of 20 mm, and a height of 20 mm; through-holes were arranged in parallel in the vertical and horizontal directions; the volume ratio: 36%; the opening shape of each through-hole is a quadrangle; the cell size: 1.4 mm; the thickness of the inner wall: 0.35 mm; and the opening ratio: 64%). The obtained honeycomb formed body was air-dried at room temperature for 2 days to obtain a carrier precursor 3 (the honeycomb structure retained the shape and dimensions of the honeycomb formed body). The carrier precursor 3 was calcinated at 600°C for 2 hours by using an electric furnace to afford a carrier 3 ($SiO_2$ content in the carrier: 5 mass%; the honeycomb structure retained the shape and dimensions of the honeycomb formed body) (step 1).

Next, the carrier 3 (6 g) was impregnated at 25°C in about 50 mL of a ruthenium chloride aqueous solution prepared so that the Ru content was 2.9 mass%. After 10 minutes, the carrier 3 was pulled up from the aqueous solution, and the excess liquid was blown off by air blow and allowed to stand at room temperature, and air-dried until the mass loss disappeared. Thus, a catalyst precursor 15 was obtained (step 2).

The catalyst precursor 15 was calcinated at 300°C for 2 hours by using an electric furnace to afford a $RuO_2/SiO_2$-containing $TiO_2$ catalyst containing 1.3 mass% of ruthenium oxide (1.0 mass% as ruthenium element) (step 4). The resulting honeycomb-shaped $RuO_2/SiO_2$-containing $TiO_2$ catalyst was pulverized in a magnetic mortar to produce a powdery catalyst 15.

(Nitrous oxide decomposition reaction using catalyst 15)

The nitrous oxide decomposition reaction was performed with BELLCAT II (manufactured by MicrotracBEL). A reaction tube (inner diameter: 8 mm) was filled with 0.1 g of the catalyst 15. The reaction tube was placed in an electric furnace, and the temperature was raised to 380°C under normal pressure (0.1 MPa (absolute)) and helium flow at 100 $cm^3$ (0°C, 0.1013 MPa (absolute))/min. Subsequently, at the same pressure and the same temperature, a gas to be brought into contact with the catalyst 15 was switched from helium to a gas containing 0.1 mol% of nitrous oxide, 3.0 mol% of oxygen, and 0.5 mol% of water (flow rate: 100 $cm^3$ (0°C, 0.1013 MPa (absolute))/min) to perform a reaction of decomposing nitrous oxide. The remainder of the nitrous oxide-containing gas is helium. The nitrous oxide decomposition reaction was carried out for 5 hours. A reaction outlet gas (post-reaction gas) after 5 hours of the reaction was analyzed by the method described above to calculate the nitrous oxide decomposition rate. The results are shown in Table 4.

<Working Example 14>

(Catalyst 16: Production of $RuO_2/SiO_2$-containing $TiO_2$ catalyst)

The same procedure as in Working Example 13 was repeated, except that in step 1, the mixing amounts of water and silica sol to be mixed with the titanium oxide powder were changed to 13 parts by mass of water and 37 parts by mass of silica sol, to afford a $RuO_2/SiO_2$-containing $TiO_2$ catalyst containing a carrier 4 ($SiO_2$ content in the carrier: 10.0 mass%) and 1.3 mass% of ruthenium oxide (1.0 mass% as ruthenium element). The resulting honeycomb-shaped $RuO_2/SiO_2$-containing $TiO_2$ catalyst was pulverized in a magnetic mortar to produce a powdery catalyst 16.

(Nitrous oxide decomposition reaction using catalyst 16)

Using this catalyst 16, a nitrous oxide decomposition reaction was performed in the same manner as in Working Example 13, and the decomposition rate of the nitrous oxide concentration was calculated. The results are shown in Table 4.

<Working Example 15>

(Catalyst 17: Production of $RuO_2/SiO_2$-containing $TiO_2$ catalyst)

The same procedure as in Working Example 13 was repeated, except that in step 1, the silica sol mixed in the titanium oxide powder was changed to SNOWTEX ST-S (manufactured by Nissan Chemical Corporation, particle diameter: 9 nm, solid content: 30 mass%), to afford a $RuO_2/SiO_2$-containing $TiO_2$ catalyst containing a carrier 5 ($SiO_2$ content in the carrier: 5.0 mass%) and 1.3 mass% of ruthenium oxide (1.0 mass% as ruthenium element). The resulting honeycomb-shaped $RuO_2/SiO_2$-containing $TiO_2$ catalyst was pulverized in a magnetic mortar to produce a powdery catalyst 17.

(Nitrous oxide decomposition reaction using catalyst 17)

Using this catalyst 17, a nitrous oxide decomposition reaction was performed in the same manner as in Working Example 13, and the decomposition rate of the nitrous oxide concentration was calculated. The results are shown in Table 4.

<Working Example 16>

**EP 4 667 090 A1**

(Catalyst 18: Production of $RuO_2/SiO_2$-containing $TiO_2$ catalyst)

The same procedure as in Working Example 13 was repeated, except that in step 1, the silica sol mixed in the titanium oxide powder was changed to SNOWTEX ST-30L (manufactured by Nissan Chemical Corporation, particle diameter: 45 nm, solid content: 30 mass%), to afford a $RuO_2/SiO_2$-containing $TiO_2$ catalyst containing a carrier 6 ($SiO_2$ content in the carrier: 5.0 mass%) and 1.3 mass% of ruthenium oxide (1.0 mass% as ruthenium element). The resulting honeycomb-shaped $RuO_2/SiO_2$-containing $TiO_2$ catalyst was pulverized in a magnetic mortar to produce a powdery catalyst 18.

(Nitrous oxide decomposition reaction using catalyst 18)

Using this catalyst 18, a nitrous oxide decomposition reaction was performed in the same manner as in Working Example 13, and the decomposition rate of the nitrous oxide concentration was calculated. The results are shown in Table 4.

<Comparative Example 3>

(Catalyst 19: Production of $RuO_2/TiO_2$ catalyst)

A $RuO_2/TiO_2$ catalyst containing 1.3 mass% of ruthenium oxide (1.0 mass% as ruthenium element) was obtained in the same manner as in Working Example 13, except that the carrier 2 ($SiO_2$ content in the carrier: 0 mass%) produced in Working Example 5 was used in step 2. The resulting honeycomb-shaped $RuO_2/TiO_2$ catalyst was pulverized in a magnetic mortar to produce a powdery catalyst 19.

(Nitrous oxide decomposition reaction using catalyst 19)

Using this catalyst 19, a nitrous oxide decomposition reaction was performed in the same manner as in Working Example 13, and the decomposition rate of the nitrous oxide concentration was calculated. The results are shown in Table 4.

[Table 4]

|  | WEx. 13 | WEx. 14 | WEx. 15 | WEx. 16 | CEx. 3 |
|---|---|---|---|---|---|
| Catalyst | Catalyst 15 | Catalyst 16 | Catalyst 17 | Catalyst 18 | Catalyst 19 |
| Carrier | Carrier 3 | Carrier 4 | Carrier 5 | Carrier 6 | Carrier 2 |
| Content (mass%) of ruthenium element in catalyst | 1.0 | 1.0 | 1.0 | 1.0 | 1.0 |
| Content (mass%) of silicon oxide in carrier | 5.0 | 10.0 | 5.0 | 5.0 | 0 |
| Particle diameter (nm) of silica sol | 22 | 22 | 9 | 45 | 0 |
| Nitrous oxide decomposition rate (%) after 5 hours of reaction | 53 | 53 | 59 | 50 | 44 |
| Remarks: 'WEx.' means Working Example according to this invention, and 'CEx.' means Comparative Example. | | | | | |

Working Examples 13 to 16 each correspond to an Example of the decomposition method using catalyst II according to the present invention.
In Table 4, the "Particle diameter of silica sol" means the average particle diameter of silicon oxide in colloidal silica used as a raw material of silicon oxide, and this particle diameter was maintained even in the catalyst (carrier).

[Example 3]

Nitrous oxide decomposition catalysts corresponding to the catalyst II (preferred embodiment) were produced in the following manner, and the produced catalysts were subjected to forced degradation treatment and then a nitrous oxide decomposition reaction in substantially the same manner as in Example 1 to evaluate the nitrous oxide decomposition rate. Note that the decomposition rate of the nitrous oxide concentration was calculated in the same manner as in Example 1.

<Working Example 17>

Forced degradation treatment and nitrous oxide decomposition reaction were performed in the same manner as in Working Example 5, except that the catalyst 6 produced in Working Example 5 was used and the temperature of forced degradation treatment was 380°C. Then, the decomposition rate of the nitrous oxide concentration after the forced degradation treatment was calculated. The results are shown in Table 5.

<Working Example 18>

(Catalyst 20: Production of $ZrO_2$-$RuO_2$/$SiO_2$-containing $TiO_2$ catalyst)

The carrier 3 (7 g) produced in Working Example 13 was impregnated at 25°C with an aqueous solution (about 40 mL) containing 4.2 g of ruthenium chloride hydrate ($RuCl_3 \cdot nH_2O$, Ru content: 40%, manufactured by Furuya Metal Co., Ltd.) and 1.0 g of zirconium oxynitrate dihydrate ($ZrO(NO_3)_2 \cdot 2H_2O$, manufactured by Kishida Chemical Co., Ltd., Zr content: 34%). After 10 minutes, the carrier 3 was pulled up from the solution, and excess liquid was blown off by air blow. Thereafter, the obtained carrier 3 was allowed to stand on a laboratory table at room temperature (about 20°C) and air-dried until the weight loss disappeared. Thus, a catalyst precursor 20 was obtained (step 2A).

The resulting catalyst precursor 20 was calcinated at 290°C for 2 hours by using an electric furnace to afford a $ZrO_2$-$RuO_2$/$SiO_2$-containing $TiO_2$ catalyst containing 2.6 mass% of ruthenium oxide (2.0 mass% as ruthenium element) and 0.6 mass% of zirconium oxide (molar ratio of zirconium element content/ruthenium element content = 0.2) (step 4). The resulting honeycomb-shaped $ZrO_2$-$RuO_2$/$SiO_2$-containing $TiO_2$ catalyst was pulverized and sieved into 0.7- to 1.0-mm granules to produce a catalyst 20.

(Nitrous oxide decomposition reaction using catalyst 20 after forced degradation treatment)

Using this catalyst 20, forced degradation treatment and nitrous oxide decomposition reaction were performed in the same manner as in Working Example 17, and the decomposition rate of the nitrous oxide concentration after the forced degradation treatment was calculated. The results are shown in Table 5.

<Comparative Example 4>

Using the catalyst 11 produced in Comparative Example 2, forced degradation treatment and nitrous oxide decomposition reaction were performed in the same manner as in Working Example 17, and the decomposition rate of the nitrous oxide concentration after the forced degradation treatment was calculated. The results are shown in Table 5.

[Table 5]

|  | WEx. 17 | WEx. 18 | CEx. 4 |
|---|---|---|---|
| Catalyst | Catalyst 6 | Catalyst 20 | Catalyst 11 |
| Carrier | Carrier 2 | Carrier 3 | Carrier 2 |
| Content (mass%) of silicon oxide in carrier | 0 | 5.0 | 0 |
| Content (mass%) of ruthenium element in catalyst | 2.0 | 2.0 | 2.0 |
| Content (mass%) of zirconium element in catalyst | 0.4 | 0.4 | 0 |
| Molar ratio in catalyst | 0.2 | 0.2 | 0 |
| Nitrous oxide decomposition rate (%) after forced degradation | 14 | 15 | 8 |
| Remarks: 'WEx.' means Working Example according to this invention, and 'CEx.' means Comparative Example. | | | |

Working Examples 17 and 18 each correspond to an Example of the decomposition method using catalyst II (preferred embodiment) according to the present invention.
The "Molar ratio in catalyst" in Table 5 represents the molar ratio of the content of the metal element (zirconium element) contained in the second carried component to the content of the ruthenium element contained in the first carried component [content (mol) of metal element/content (mol) of ruthenium element] in the catalyst.

The results shown in Tables 1 to 5 have clearly demonstrated that when the catalyst 5, 11, or 19 with the carrier containing neither silicon oxide nor the second carried component is used, although nitrous oxide can be decomposed, the decomposition rate is low and nitrous oxide cannot be efficiently decomposed for a long period of time (Comparative Examples 1 to 4).

By contrast, in the cases of using the catalyst I having the first carried component and the second carried component carried on the carrier or the catalyst II (preferred embodiment) having the first carried component and the second carried component carried on the titanium oxide- and silicon oxide-containing carrier (each Working Example of Example 1 and Example 3), nitrous oxide can be decomposed at a high decomposition rate even when forced degradation treatment is performed. In addition, in the cases of using the catalyst II having the first carried component carried on the titanium oxide- and silicon oxide-containing carrier (each Working Example of Example 2), a high decomposition rate is exhibited even when the nitrous oxide decomposition reaction is performed for 5 hours. These results have revealed that the decomposition method using catalyst I or catalyst II according to the present invention can efficiently decompose nitrous oxide over a long period of time.

**Claims**

1.  A method of decomposing nitrous oxide, comprising the step of
    bringing a nitrous oxide-containing gas containing nitrous oxide, water vapor, and oxygen into contact with a catalyst having, carried on a titanium oxide-containing carrier, a first component containing at least one kind selected from the group consisting of ruthenium and ruthenium compounds and a second component containing at least one kind selected from the group consisting of antimony, antimony compounds, cerium, cerium compounds, zirconium, zirconium compounds, silicon, and silicon compounds.

2.  The method of decomposing nitrous oxide according to claim 1, wherein the second component is an oxide containing at least one kind selected from the group consisting of antimony oxide, cerium oxide, zirconium oxide, and silicon oxide.

3.  The method of decomposing nitrous oxide according to claim 1, wherein the second component contains at least one kind selected from the group consisting of zirconium and zirconium compounds.

4.  The method of decomposing nitrous oxide according to claim 1, wherein a molar ratio of content of a metal element contained in the second component in the catalyst to content of the ruthenium element contained in the first component is from 0.1 to 5.

5.  The method of decomposing nitrous oxide according to claim 1, wherein the first component contains ruthenium oxide.

6.  The method of decomposing nitrous oxide according to claim 1, wherein the ruthenium element in the catalyst has a content of 0.5 to 10 mass%.

7.  The method of decomposing nitrous oxide according to claim 1, wherein the catalyst is on a substrate having a honeycomb structure.

8.  A method of decomposing nitrous oxide, comprising the step of bringing a catalyst having, carried on a titanium oxide- and silicon oxide-containing carrier, a first component containing at least one kind selected from the group consisting of ruthenium and ruthenium compounds into contact with a nitrous oxide-containing gas containing nitrous oxide, water vapor, and oxygen.

9.  The method of decomposing nitrous oxide according to claim 8, wherein the silicon oxide in the carrier has a content of 1 to 20 mass%.

10. The method of decomposing nitrous oxide according to claim 8, wherein the silicon oxide is derived from colloidal silica having a particle diameter of 5 to 45 nm.

11. The method of decomposing nitrous oxide according to claim 8, wherein the carrier further carries a second component containing at least one kind selected from the group consisting of antimony, antimony compounds, cerium, cerium compounds, zirconium, zirconium compounds, silicon, and silicon compounds.

12. The method of decomposing nitrous oxide according to claim 11, wherein the second component is an oxide containing at least one kind selected from the group consisting of antimony oxide, cerium oxide, zirconium oxide, and silicon oxide.

13. The method of decomposing nitrous oxide according to claim 8, wherein the carrier further carries a second component containing at least one kind selected from the group consisting of zirconium and zirconium compounds.

14. The method of decomposing nitrous oxide according to claim 11, wherein a molar ratio of content of a metal element contained in the second component in the catalyst to content of the ruthenium element contained in the first component is from 0.1 to 5.

15. The method of decomposing nitrous oxide according to claim 8, wherein the first component contains ruthenium oxide.

16. The method of decomposing nitrous oxide according to claim 8, wherein the ruthenium element in the catalyst has a content of 0.5 to 10 mass%.

17. The method of decomposing nitrous oxide according to claim 8, wherein the catalyst is on a substrate having a honeycomb structure.

18. A method of producing a nitrous oxide decomposition catalyst, comprising the steps of:

obtaining a carrier by calcinating a carrier precursor obtained by extruding a carrier raw material mixture containing titanium oxide, silicon oxide, and water;
causing the carrier to carry a first component raw material containing a ruthenium compound;
causing the carrier to carry a second component raw material containing at least one kind selected from the group consisting of antimony compounds, cerium compounds, zirconium compounds, and silicon compounds;
calcinating a catalyst precursor having the first component raw material and the second component raw material carried on the carrier.

19. The method of producing a nitrous oxide decomposition catalyst according to claim 18, wherein the second component raw material is a zirconium compound.

20. The method of producing a nitrous oxide decomposition catalyst according to claim 18, wherein the silicon oxide is colloidal silica having a particle diameter of 5 to 45 nm.

21. The method of producing a nitrous oxide decomposition catalyst according to claim 18, comprising a step of disposing, after calcinating the catalyst precursor, the catalyst precursor on a substrate having a honeycomb structure.

## INTERNATIONAL SEARCH REPORT

| | International application No. |
|---|---|
| | **PCT/JP2024/004494** |

**A.    CLASSIFICATION OF SUBJECT MATTER**

*B01D 53/86*(2006.01)i; *B01J 23/46*(2006.01)i; *B01J 23/63*(2006.01)i; *B01J 23/644*(2006.01)i; *B01J 37/02*(2006.01)i
FI:    B01D53/86 222; B01J37/02 101D; B01J23/63 A; B01J23/644 A; B01J23/46 301A

According to International Patent Classification (IPC) or to both national classification and IPC

**B.    FIELDS SEARCHED**

Minimum documentation searched (classification system followed by classification symbols)

A61M16/01; B01D53/86-94; B01J23/38-68,89; B01J37/02; C01B21/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2020-528348 A (BASF CORPORATION) 24 September 2020 (2020-09-24) | 1-9 |
|  | claims, paragraphs [0011]-[0016], [0094]-[0127], examples | |
| Y | claims, paragraphs [0011]-[0016], [0094]-[0127], examples | 10-21 |
| Y | JP 2008-746 A (ENGELHARD CORPORATION) 10 January 2008 (2008-01-10) | 10-17, 20 |
|  | paragraphs [0067], [0112]-[0113] | |
| X | JP 2017-537786 A (JOHNSON MATTHEY PUBLIC LIMITED COMPANY) 21 December 2017 (2017-12-21) | 18-19, 21 |
|  | claims, paragraphs [0002], [0026]-[0044] | |
| Y | paragraphs [0002], [0026]-[0044] | 18-21 |
| P, X | WO 2023/084825 A1 (SUMITOMO CHEMICAL COMPANY, LIMITED) 19 May 2023 (2023-05-19) | 1-21 |
|  | entire text | |

☐ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 April 2024** | **14 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/004494**

| Patent document cited in search report | | | Publication date (day/month/year) | Patent family member(s) | | | Publication date (day/month/year) |
|---|---|---|---|---|---|---|---|
| JP | 2020-528348 | A | 24 September 2020 | US | 2020/0156046 | A1 | |
| | | | | paragraphs [0010]-[0015], [0105]-[0138], examples, claims | | | |
| | | | | WO | 2019/021244 | A1 | |
| | | | | EP | 3668641 | A1 | |
| JP | 2008-746 | A | 10 January 2008 | WO | 1997/011769 | A1 | |
| | | | | p. 25, line 28 to p. 26, line 4, p. 44, lines 3-28 | | | |
| | | | | EP | 854752 | A1 | |
| | | | | AU | 7201896 | A | |
| JP | 2017-537786 | A | 21 December 2017 | US | 2017/0348676 | A1 | |
| | | | | paragraphs [0002], [0025]-[0044] | | | |
| | | | | WO | 2016/097760 | A1 | |
| | | | | EP | 3233276 | A1 | |
| WO | 2023/084825 | A1 | 19 May 2023 | CA | 3227496 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06218232 A

**Non-patent literature cited in the description**

- *Catalyst Preparation Chemistry*, 1989, 211
- *Catalyst Preparation Chemistry*, 1989, 89
- Catalyst Engineering Course. *Handbook of Catalysts Using Any of 10 Elements*, 1978, 254
- *Metal Oxides and Composite Oxides*, 1980, 107